(19) Europäisches Patentamt
European Patent Office
Office européen des brevets

(11) **EP 4 593 301 A1**

(12) **EUROPEAN PATENT APPLICATION**
published in accordance with Art. 153(4) EPC

(43) Date of publication:
**30.07.2025 Bulletin 2025/31**

(21) Application number: **23867550.8**

(22) Date of filing: **20.09.2023**

(51) International Patent Classification (IPC):
**H04B 7/0456** (2017.01)　　**H04W 24/10** (2009.01)
**H04W 72/04** (2023.01)

(52) Cooperative Patent Classification (CPC):
**H04B 7/0456; H04B 7/06; H04L 5/00; H04W 24/10; H04W 72/04**

(86) International application number:
**PCT/CN2023/119963**

(87) International publication number:
**WO 2024/061263 (28.03.2024 Gazette 2024/13)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **21.09.2022 CN 202211153237**

(71) Applicant: **Vivo Mobile Communication Co., Ltd.
Dongguan, Guangdong 523863 (CN)**

(72) Inventors:
- **YUAN, Jiangwei
  Dongguan, Guangdong 523863 (CN)**
- **WU, Hao
  Dongguan, Guangdong 523863 (CN)**

(74) Representative: **Walaski, Jan Filip
Venner Shipley LLP
200 Aldersgate
London EC1A 4HD (GB)**

(54) **PMI COMBINATION COEFFICIENT SENDING METHOD AND APPARATUS, AND TERMINAL**

(57)　　The present application relates to the field of wireless communications, and discloses a PMI combination coefficient sending method and apparatus, and a terminal. The PMI combination coefficient sending method provided by embodiments of the present application comprises: a terminal acquires a plurality of PMI combination coefficients to be fed back under cooperative transmission of a plurality of reference resources; for the PMI combination coefficients, determining priorities of the PMI combination coefficients; and mapping the plurality of PMI combination coefficients to a second part of a channel state information (CSI) report according to the descending order of the priorities for sending.

200

A terminal acquires a plurality of PMI combination coefficients to be fed back under cooperative transmission of a plurality of reference resources — S210

For the PMI combination coefficients, determine priorities of the PMI combination coefficients — S212

Map the plurality of PMI combination coefficients to a second part of a CSI report according to the descending order of the priorities for sending — S214

FIG. 2

## Description

## CROSS-REFERENCE TO RELATED APPLICATIONS

This application claims priority to Chinese Patent Application No. 202211153237.4, filed with the China National Intellectual Property Administration on September 21, 2022 and entitled "PMI combination coefficient sending method and apparatus, and terminal", which is incorporated herein by reference in its entirety.

## TECHNICAL FIELD

This application belongs to the technical field of wire communication, and particularly relates to a PMI combination coefficient sending method and apparatus, and a terminal.

## BACKGROUND

Coordinated multiple points (Coordinated Multiple Points, CoMP) transmission means that a plurality of transmission reception points (Transmission Reception Point, TRP) geographically separated coordinately take part in data transmission for one terminal or joint reception of data sent by one terminal. A plurality of transmission points taking part in coordination usually refer to base stations of different cells. Coordination of base stations of a plurality of cells can utilize interference signals as useful signals, so that the interference among the cells is reduced, and the frequency spectrum utilization of a system is improved.

Each common CoMP solution may be classified into one of the following categories: joint processing (Joint Processing, JP) or collaborative scheduling (Collaborative Scheduling, CS), or coordinated beamforming (Coordinated Beamforming, CB).

Joint processing (JP) means that data of a UE is available on one or more time frequency resource points in a CoMP cooperation set, including:

(1) Joint transmission (Joint Transmission, JT). For example, data is simultaneously transmitted from multiple points (a part of the CoMP cooperation set or the whole CoMP cooperation set) to a UE or a plurality of UE in one time frequency resource. Alternatively, data is simultaneously transmitted to UE from multiple points. For example, the quality of received signals and/or the data throughout are improved (coherently or incoherently).

(2) Dynamic point selection (Dynamic Point Selection, DPS)/frequency modulation. Data is transmitted from one point (in the CoMP cooperation set) in one time frequency resource. A sending/mixing point may change from one subframe to another subframe, including changes of an RB pair in one subframe. The data may be available simultaneously at multiple points. The Dynamic point selection/frequency modulation may include dynamic cell selection (DCS).

(3) Combination of DPS and JT. In this case, multiple points may be selected in the time frequency resource for data transmission. Collaborative Scheduling/Coordinated Beamforming (CS/CB) means that for one time frequency resource, the data of the UE is only available at one point of the CoMP cooperation set and is transmitted from this point (DL data transmission is started from this point), but a decision of user scheduling/beamforming is made coordinately among points corresponding to the CoMP cooperation set. The selection of a transmission point is semi-static, i.e., semi-static point selection (SSPS). That is, each time the data is transmitted from one point to a specific UE, the transmission point can only be changed in a semi-static manner.

In the related art, with consideration of feedback overhead of precoding matrix indicators (Precoding matrix indicator, PMI), the design of a codebook increases frequency domain compression and extends the highest rank supported to four. At the same time, a Bitmap mode is added to indicate distribution of non-zero coefficients fed back by the PMI. The codebook generation for each layer may be represented by the following formula:

$$W = W_1 \widetilde{W}_2 W_f^H$$

where $W_1 = \begin{bmatrix} v_0 v_1 \dots v_{L-1} & 0 \\ 0 & v_0 v_1 \dots v_{L-1} \end{bmatrix}$, $v_i$, $i \in \{0, 1, \dots, L - 1\}$ represents a DFT beam vector with a dimension $N_1 N_2 \times 1$;

$$\widetilde{W}_2 = \begin{bmatrix} p_0^{(1)} & \cdots & 0 \\ \vdots & \ddots & \vdots \\ 0 & \cdots & p_{2L-1}^{(1)} \end{bmatrix} \begin{bmatrix} p_{0,0}^{(2)}\varphi_{0,0} & \cdots & p_{0,Mv-1}^{(2)}\varphi_{0,Mv-1} \\ \vdots & \ddots & \vdots \\ p_{2L-1,0}^{(2)}\varphi_{2L-1,0} & \cdots & p_{2L-1,Mv-1}^{(2)}\varphi_{2L-1,Mv-1} \end{bmatrix},$$

where values of $p_i^{(1)}$, $i \in \{0,1,\dots,L-1\}$ are the same, an amplitude coefficient in a direction of polarization $r = 0$, values of $p_i^{(1)}$, $i \in \{L, L+1, \dots, 2L-1\}$ are the same, an amplitude coefficient in a direction of polarization $r = 1$, $p_{i,m}^{(2)}$ and $\varphi_{i,m}$ are an amplitude coefficient and a phase coefficient corresponding to a beam $i$ of a tap $m$; $W_f = [f_0 f_1 \dots f_{Mv-1}]$, $f_i$, $i \in \{0,1,\dots,Mv-1\}$ represents a DFT vector with a dimension $1 \times N_3$. When feeding back the PMI, the terminal feeds back PMI coefficients for acquiring or indicating $W_1$, $\tilde{W}_2$, and $W_f$.

The PMI coefficients fed back by the terminal include PMI combination coefficients. However, for priorities of the PMI combination coefficients in a scenario of coordinated transmission by a plurality of TPRs (or a plurality of panels, or a plurality of cells, or a plurality of sites), if the terminal feeds back the PMI combination coefficients according to a single-TRP transmission scenario, a priority order of the PMI combination coefficients fed back by the terminal may be inaccurate.

## SUMMARY

Embodiments of this application provide a PMI combination coefficient sending method and apparatus, and a terminal, which can solve the problem that the priority order of PMI combination coefficients fed back by the terminal is inaccurate.

According to a first aspect, provided is a PMI combination coefficient sending method. The method includes: acquiring, by a terminal, a plurality of PMI combination coefficients to be fed back under coordinated transmission of a plurality of reference resources; for each of the PMI combination coefficients, determining a priority of the PMI combination coefficient; and mapping the plurality of PMI combination coefficients to a second part of a channel state information (CSI) report according to a descending order of priority for sending.

According to a second aspect, provided is a PMI combination coefficient sending apparatus, including an acquisition module, configured to acquire a plurality of PMI combination coefficients to be fed back under coordinated transmission of a plurality of reference resources; a determination module, configured to, for each of the PMI combination coefficients, determine a priority of the PMI combination coefficient; and a sending module, configured to map the plurality of PMI combination coefficients to a second part of a channel state information (CSI) report according to a descending order of priority for sending.

According to a third aspect, provided is a terminal. The terminal includes a processor and a memory, where the memory stores a program or an instruction capable of being run on the processor, and the program or instruction, when executed by the processor, implements the steps of the method according to the first aspect.

According to a fourth aspect, provided is a terminal, including a processor and a communication interface, where the processor is configured to implement the steps of the method according to the first aspect and the communication interface is configured to communicate with an external device.

According to a fifth aspect, provided is a transmission system for PMI combination coefficients, including a terminal and a network side device, where the terminal can be configured to execute the steps of the method according to the first aspect, and the network side device can be configured to acquire the PMI combination coefficients sent by the terminal.

According to a sixth aspect, provided is a readable storage medium. The readable storage medium stores a program or an instruction, where the program or the instruction, when executed by the processor, implements the steps of the method according to the first aspect.

According to a seventh aspect, provided is a chip. The chip includes a processor and a communication interface. The communication interface is coupled to the processor. The processor is configured to run a program or an instruction to implement the steps of the method according to the first aspect.

According to an eighth aspect, provided is a computer program/program product. The computer program/program product is stored in a storage medium, and the computer program/program product is executed by at least one processor to implement the steps of the method according to the first aspect.

In embodiments of this application, the terminal acquires the plurality of PMI combination coefficients to be fed back under coordinated transmission of the plurality of reference resources, determines the priority of each PMI combination coefficient, and then maps the plurality of PMI combination coefficients to the second part of the channel state information (Channel State Information, CSI) according to the descending order of priority for sending, to determine the priorities of the PMI combination coefficients in a scenario of coordinated transmission of the plurality of reference resources (each reference resource corresponds to one TPR, one panel, one cell, or one site) and feed back the PMI combination coefficients according to the priorities, so as to ensure the accuracy of the priority order of the PMI combination coefficients fed back and guarantee that PMI combination coefficients with high priorities can be fed back.

**BRIEF DESCRIPTION OF THE DRAWINGS**

FIG. 1 is a block diagram of a wireless communication system to which an embodiment of this application may be applied;

FIG. 2 is a flowchart of a precoding matrix indicator (PMI) combination coefficient sending method in an embodiment of this application;

FIG. 3 is a flowchart of a PMI acquisition method in an embodiment of this application;

FIG. 4 is a schematic structural diagram of a precoding matrix indicator (PMI) combination coefficient sending apparatus in an embodiment of this application;

FIG. 5 is a schematic structural diagram of a communication device provided in an embodiment of this application;

FIG. 6 is a schematic structural diagram of a hardware structure of a terminal provided in an embodiment of this application; and

FIG. 7 is a schematic structural diagram of a hardware structure of a network side device provided in an embodiment of this application.

**DETAILED DESCRIPTION**

Technical solutions in embodiments of this application are clearly and completely described in the following with reference to accompanying drawings in the embodiments of this application. Apparently, the described embodiments are merely some, rather than, all the embodiments of this application. Based on the embodiments of this application, all other embodiments derived by persons of ordinary skill in the art should fall within the protection scope of this application.

The terms "first", "second", and the like in the description and claims of this application are used to distinguish similar objects, but are unnecessarily used to describe a specific sequence or order. It is to be understood that the terms used in this way are exchangeable in a proper case, so that the embodiments of this application can be implemented in an order different from the order shown or described herein, and objects distinguished by "first" and "second" are usually of the same category and the number of the objects is not defined. For example, there may be one or more first objects. In addition, "and/or" in the description and claims represents at least one of connected objects, and the character "/" usually represents that previous and next associated objects form an "or" relationship.

It is worth noting that the technologies described in the embodiments of this application are not limited to the long term evolution (Long Term Evolution, LTE)/LTE-advanced (LTE-advanced, LTE-A) system, and may further be applied to various wireless communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single carrier frequency division multiple access (Single Carrier Frequency Division Multiple Access, SC-FDMA), and other systems. The terms "system" and "network" in the embodiments of this application are often used interchangeably, and the described technology may be applied to the systems and radio technologies mentioned above, and may be also applied to other systems and radio technologies. For an exemplary purpose, a new radio (New Radio, NR) system is described in the following description, and the term NR is used in most description below. However, these technologies may also be applied to other applications besides the NR system, for example, a 6th generation (6th Generation, 6G) communication system.

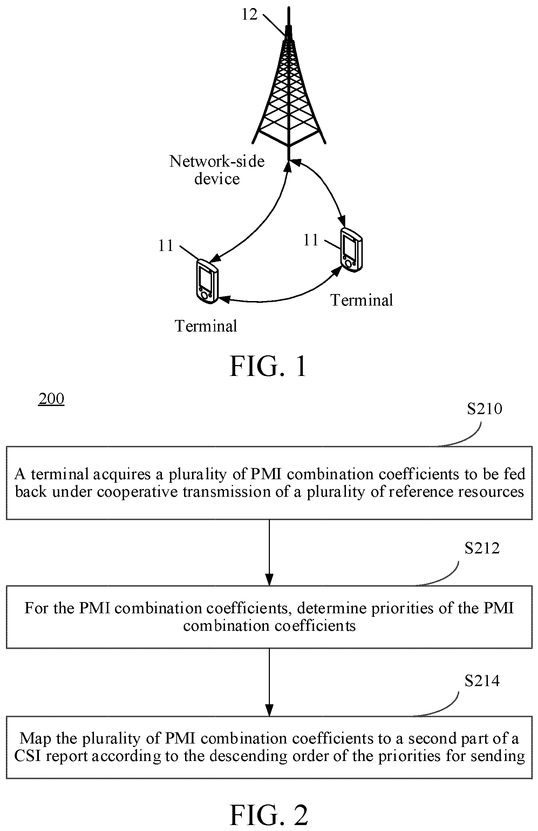

FIG. 1 shows a block diagram of a wireless communication system to which an embodiment of this application may be applied. The wireless communication system includes a terminal 11 and a network side device 12. The terminal 11 may be terminal side devices such as a mobile phone, a tablet personal computer, a laptop computer or a notebook computer, a personal digital assistant (personal Digital Assistant, PDA), a palmtop computer, a notebook, an ultra-mobile person computer (Ultra-Mobile Person Computer, UMPC), a mobile Internet device (Mobile Internet Device, MID), an augmented reality (Augmented Reality, AR)/virtual reality (Virtual Reality, VR) device, a robot, a wearable device, vehicle user equipment (Vehicle User Equipment, VUE), pedestrian user equipment (Pedestrian User Equipment, PUE), a smart home (a smart home with a wireless communication function, for example, a refrigerator, a television, a washer or furniture), a game machine, a personal computer (Personal Computer, PC), a teller machine or a self-service machine. The wearable device including: a smart watch, a smart bracelet, a smart earphone, smart glasses, smart jewelry (a smart bangle, a smart chain bracelet, a smart ring, a smart necklace, a smart leglet, a smart anklet, and the like), a smart wrist strap, a smart garment, and the like. It is to be noted that in the embodiments of this application, a specific type of the terminal 11 is not limited. The network side device 12 may include an access network device or a core network device. The access network device may also be referred to as a wireless access network device, a radio access network (Radio Access Network, RAN), a wireless access network function or a wireless access network unit. The access network device may include a base station, a WLAN access point or a WiFi node or the like, the base station may be referred to as a node B, an evolved mode B (evolved Node B, eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmission receiving point (Transmission Receiving Point, TRP) or some other suitable terms in the field as long as the same technical effect is achieved, and the base station is not limited to a specific technical word. It is to be noted that in the embodiments of this application, introduction is made only taking the base station in the NR system as an example, and the specific type of the base station is not limited.

A PMI combination coefficient sending solution provided in an embodiment of this application will be described in detail below in conjunction with drawings through some embodiments and application scenarios thereof.

FIG. 2 shows a flowchart of a precoding matrix indicator (PMI) combination coefficient sending method in an embodiment of this application. The method 200 may be executed by a terminal. In other words, the method may be executed by software or hardware installed in the terminal. As shown in FIG. 2, the method may include the following steps:

S210, a terminal acquires a plurality of PMI combination coefficients to be fed back under coordinated transmission of a plurality of reference resources.

In an embodiment of this application, each reference resource may be any one of one channel state information-reference signal (CSI-RS), a plurality of channel state information-reference signals, one channel state information-reference signal port group, and a plurality of channel state information-reference signal port groups. Each reference resource may correspond to one TRP, one panel, one cell, or one site. For example, each TRP may send one or more channel state information signals corresponding thereto. Reference resources corresponding to a plurality of TRPs may be different.

In an embodiment of this application, the terminal may measure the channel reference signals transmitted by the plurality of TRPs (or panels, cells, and sites) to obtain channel information (channel information corresponding to each reference resource) corresponding to each TRP (or panel, cell, and site). According to the channel information corresponding to each TRP, a precoding matrix to be fed back can be acquired to acquire PMI coefficients of the precoding matrix, so as to obtain the plurality of PMI combination coefficients to be fed back.

The terminal may determine the measured channel reference signals according to the configuration of the network side device. For example, the network side device may configure channel reference signals to be measured for the UE through a multi-TRP (MTRP) CSI report configuration.

In an embodiment of this application, coefficients of the PMI coefficients are $i_1$ and $i_2$, where $i_1$ includes $i_{1,1}$, $i_{1,2}$, $i_{1,5}$, $i_{1,6,l}$, $i_{1,7,l}$, and $i_{1,8,l}$, and $i_2$ includes $i_{2,3,l}$, $i_{2,4,l}$, and $i_{2,5,l}$, where $l$=one or more values in 1, 2, 3, 4. For the rank (RI) value v which is 2, $l$=1, 2; for the RI value v which is 4, $l$=1, 2, 3, 4.

$i_{1,1}$ is used for indicating an index of an orthogonal discrete Fourier transform (DFT) vector group, and is equal to $[q_1, q_2]$, where $q_1 \in \{0,1, ... , O_1 - 1\}$, $q_2 \in \{0,1, ... , O_2 - 1\}$, $O_1$, $O_2$ is an oversampling factor configured by the network;

$i_{1,2}$ is used for indicating L vector indices in the orthogonal DFT vector group indicated by $i_{1,1}$, and is equal to

$$i_{1,2} \in \left\{0,1, ... , \binom{N_1 N_2}{L} - 1\right\}$$

, where $N1$, $N2$ is a port number parameter configured by the network, L is the number of DFT vectors indicated by the network, and $\binom{N_1 N_2}{L}$ represents the number of combinations of L beams selected from $N_1 N_2$ beams

$i_{1,5}$ indicates an initial position $M_{initial}$ of a window with a length of $2M_v$, and a value range is $i_{1,5} \in \{0,1, ...,2M_v - 1\}$, where $M_v$ represents the number of time domain taps. Note: it only exits when $N_3 > 19$, and when $N_3 \leq 19$, $i_{1,5}$=0 and the terminal does not need to feed back the coefficients.

$i_{1,6,l}$ is used for indicating positions of $M_v$ tap coefficients fed back by layer $l$ in $N_3$ tap coefficients, and there are two cases for a value range: when $N_3 > 19$, the value range is $i_{1,6,l} \in \left\{0,1, ... , \binom{2M_v - 1}{M_v - 1} - 1\right\}$, and when $N_3 \leq 19$, the value range is $i_{1,6,l} \in \left\{0,1, ... , \binom{N_3 - 1}{M_v - 1} - 1\right\}$, which is fed back in a form of combinatorial numbers.

$i_{1,7,l}$ is a non-zero combination coefficient indication of layer $l$, which is a bit sequence, with a total length of $2LM_v$.

$i_{1,8,l}$ is a strongest coefficient indication of layer $l$, with a value range of $i_{1,8,l} \in \{0,1, ... ,2L - 1\}$, where for transmission with rank=1, $i_{1,8,l}$ represents the $i_{1,8,l}$th non-zero combination coefficient, and for transmission greater than rank=1, $i_{1,8,l}$ represents the $ii_{1,8,l}$th coefficient.

$i_{2,3,l}$ is a quantification indication of amplitude coefficients of two polarizations of layer $l$, each amplitude coefficient is a 4bit bit string, and each bit string corresponds to one quantized value, where an amplitude coefficient of polarization where the strongest coefficient is located is not fed back, and is assumed as 1.

$i_{2,4,l}$ is a quantification indication of amplitude coefficients of all tap coefficients of layer $l$, each amplitude coefficient is a 3bit bit string, and each codepoint corresponds to one quantized value, with a total of $2LM_v$ amplitude coefficients acquired. The amplitude coefficient of the strongest coefficient is not fed back and is assumed as 1. For the remaining coefficients, only non-zero amplitude combination coefficients are fed back. Therefore, for layer $l$, a total number of the feedback coefficients is $K_{NZ,l}$ - 1, where $K_{NZ,l}$ represents the number of the non-zero amplitude combination coefficients of layer $l$.

$i_{2,5,l}$ is a quantification indication of phase coefficients of all tap coefficients of layer $l$, each coefficient is a 4bit bit string, and each codepoint corresponds to one quantized value, with a total of $2LM_l$ phase coefficients acquired. A phase coefficient of the strongest coefficient is not fed back and is assumed as 0. For the remaining coefficients, only phase coefficients corresponding to the non-zero amplitude combination coefficients are fed back. Therefore, for layer $l$, a total number of the feedback coefficients is $K_{NZ,l}$ - 1, where $K_{NZ,l}$ represents the number of the non-zero amplitude combination coefficients.

A specific mapping order of coefficients is shown in table 1.

Table 1.

| CSI part | | Content | Magnitude |
|---|---|---|---|
| CSI part1 | | Indicate a number $K_{NZ}$ of the non-zero combination coefficients of all layers and used for determining magnitude of each PMI coefficient in Part2; | For a case of transmission with rank1, the length is $\lceil \log_2 K_0 \rceil$; <br><br> For transmission with rank greater than 1, the length is $\lceil \log_2 2K_0 \rceil$ where $K_0 = \lceil \beta 2L\,M_0 \rceil$ |
| CSI part2 | Group0 | $i_{,1,1}$, $i_{1,2}$, $i_{1,8,l}$ | $i_{1,1}$: $\lceil \log_2 O_1 O_2 \rceil$ <br> $i_{1,2}$: $\left\lceil \log_2 \binom{N_1 N_2}{L} \right\rceil$ <br> $i_{1,8,l}$ for transmission with rank v=1, $\lceil \log_2 K_{NZ} \rceil$; for transmission with rank v>1, $\lceil \log_2 2L \rceil$ |
| | Group 1 | High priority elements of $i_{1,5}$, $i_{1,6,l}$, and $i_{1,7,l}$, high priority elements of $i_{2,3,l}$ and $i_{2,4,l}$, and high priority elements of $i_{2,5,l}$ | $i_{1,7,l}$: $v2LM_v - \lceil K_{NZ}/2 \rceil$ <br> $i_{2,4,l}$: $\lceil K_{NZ}/2 \rceil - v$ <br><br> $i_{2,5,l}$: $\lceil K_{NZ}/2 \rceil - v$ |

(continued)

| CSI part | | Content | Magnitude |
|---|---|---|---|
| | Group2 | Low priority elements of $i_{1,7,l}$, low priority elements of $i_{2,4,l}$, and low priority elements of $i_{2,5,l}$ | $i_{1,7,l}$: $\lfloor K_{NZ}/2 \rfloor$ <br> $i_{2,4,l}$: $\lfloor K_{NZ}/2 \rfloor$ <br><br> $i_{2,5,l}$: $\lfloor K_{NZ}/2 \rfloor$ |

In an embodiment of this application, the PMI combination coefficients include, but are not limited to, one or more of $i_{2,4,l}$, $i_{2,5,l}$ and $i_{1,7,l}$.

It may be known from the above table that the first group (Group 1) and the second group (Group2) of the second part (CSI part2) of the CSI report respectively feed back the PMI combination coefficients (one or more of $i_{2,4,l}$, $i_{2,5,l}$, and $i_{1,7,l}$) with high and low priorities. The terminal will perform feedback according to a priority order of the PMI combination coefficients. Therefore, before feedback, it needs to determine a priority of each PMI combination coefficient.

S212, for each of the PMI combination coefficients, determine a priority of the PMI combination coefficient.

In an embodiment of this application, determining the priority of each PMI combination coefficient may be determining a descending order of each PMI combination coefficient.

S214, map the plurality of PMI combination coefficients to a second part of a CSI report according to the descending order of priority for sending.

In an embodiment of this application, the terminal acquires the plurality of PMI combination coefficients to be fed back under coordinated transmission of the plurality of reference resources, determines the priority of each PMI combination coefficient, and then maps the plurality of PMI combination coefficients to the second part of the channel state information (Channel State Information, CSI) for sending according to the descending order of priority for sending. If the second part of the CSI report cannot receive all the PMI combination coefficients, PMI combination coefficients with low priorities may be discarded, to determine the priorities of the PMI combination coefficients in a scenario of coordinated transmission of the plurality of reference resources (each reference resource corresponds to one TPR, one panel, one cell, or one site) and feed back the PMI combination coefficients according to the priorities, so as to ensure the accuracy of the priority order of the PMI combination coefficients fed back and guarantee that PMI combination coefficients with high priorities can be fed back.

In a possible implementation, in S212, determining a priority of the PMI combination coefficient may include: determining the priority of the PMI combination coefficient according to a first reference basis vector position, where the first reference basis vector position is a reference basis vector position corresponding to the PMI combination coefficient among a plurality of reference basis vector positions. For example, the first reference basis vector position may be associated with the same reference resource as the PMI combination coefficient.

In the foregoing possible implementation, in a possible implementation, one of the reference basis vector positions may correspond to one reference resource, and reference resources corresponding to a plurality of the reference basis vector positions are not exactly same. In another possible implementation, the plurality of reference basis vectors correspond to a same reference resource, and the plurality of reference basis vector positions correspond to a plurality of transmission layers one by one. That is, the plurality of reference basis vector positions corresponding to the same reference resource correspond to the plurality of transmission layers one by one. For example, if there are four transmission layers, one reference resource corresponds to four reference basis vector positions. One reference basis vector position of the four reference basis vector positions corresponds to one transmission layer. For example, a first reference basis vector position corresponds to a transmission layer 1 (i.e., the first reference basis vector position is a reference basis vector position on the transmission layer 1). A second reference basis vector position corresponds to a transmission layer 2, a third reference basis vector position corresponds to a transmission layer 3, and a fourth reference basis vector position corresponds to a transmission layer 4.

In the foregoing possible implementation, in a possible implementation, the first reference basis vector position is related to a basis vector position corresponding to a first strongest coefficient, where the first strongest coefficient is a PMI combination coefficient with strongest energy and/or maximum amplitude among all the PMI combination coefficients associated with all the reference resources. For example, there are two reference resources. If one reference resource is associated with four PMI combination coefficients, then the first strongest coefficient is a PMI combination coefficient with strongest energy and/or maximum amplitude in eight PMI combination coefficients, and the first reference basis vector position is determined according to a basis vector position corresponding to the first strongest coefficient.

In the foregoing possible implementation, optionally, when feeding back the reference basis vector positions, the terminal may acquire a difference of each second reference basis vector position among at least one second reference basis vector positions relative to the reference basis vector position corresponding to the first strongest coefficient, where the second reference basis vector position is a reference basis vector position the plurality of reference basis vector positions, and the at least one second reference basis vector position does not include the reference basis vector position corresponding to the first strongest coefficient; and then send the at least one difference. That is, in this optional implementation, the terminal does not feed back the reference basis vector position of the first strongest coefficient. For basis vector positions of the strongest coefficient corresponding to other reference resources, the terminal feeds back differences between the basis vector positions and the reference basis vector position of the first strongest coefficient.

Alternatively, in another possible implementation, the first reference basis vector position is related to basis vector positions corresponding to a plurality of second strongest coefficients, where the plurality of second strongest coefficients include a PMI combination coefficient with strongest energy and/or maximum amplitude among PMI combination coefficients associated with each of the first reference resources. For example, there are two reference resources. One reference resource is associated with four PMI combination coefficients. If a PMI combination coefficient with strongest energy and/or maximum amplitude, associated with a first reference resource, among the PMI combination coefficients is a second PMI combination coefficient among the four PMI combination coefficients, and a PMI combination coefficient with strongest energy and/or maximum amplitude, associated with the second reference resource, among the PMI combination coefficients is a third PMI combination coefficient among the four PMI combination coefficients, then the first reference basis vector position is determined according to the second PMI combination coefficient and the third PMI combination coefficient.

In the foregoing possible implementation, optionally, when feeding back the reference basis vector position, the terminal may acquire reference basis vector positions corresponding to each of the second strongest coefficients; the terminal sends the reference basis vector positions corresponding to each of the second strongest coefficients rather than the reference basis vector position corresponding to the first strongest coefficient. The first strongest coefficient is a PMI combination coefficient with strongest energy and/or maximum amplitude among the PMI combination coefficients associated with all the reference resources. That is, in this optional implementation, the terminal does not feed back the reference basis vector position of the first strongest coefficient but feeds back the basis vector positions of the second strongest coefficients corresponding to other reference resources.

In a case that the plurality of reference basis vectors correspond to a same reference resource and the plurality of reference basis vector positions correspond to a plurality of transmission layers one by one, for one of the transmission layers $l$, in an optional implementation, the first reference basis vector position is related to a basis vector position of a combination coefficient with strongest energy and/or maximum amplitude (a first strongest coefficient) among the combination coefficients of the transmission layer $l$ associated with all the reference resources. When feeding back the reference basis vector positions, the terminal may acquire a difference of each second reference basis vector position among at least one second reference basis vector position relative to the reference basis vector position corresponding to the first strongest coefficient, where the second reference basis vector position is a reference basis vector position among the plurality of reference basis vector positions, and the at least one second reference basis vector position does not include the reference basis vector position corresponding to the first strongest coefficient; and then send the at least one difference. That is, in this optional implementation, the terminal does not feed back the reference basis vector position of the first strongest coefficient. For basis vector positions of the strongest coefficient corresponding to other reference resources, the terminal feeds back differences between the basis vector positions and the reference basis vector position of the first strongest coefficient. In another possible implementation, the first reference basis vector position is related to a basis vector position of a combination coefficient with strongest energy/maximum amplitude (the second strongest coefficient) among the combination coefficients associated with each reference resource. When feeding back the reference basis vector position, the terminal may acquire reference basis vector positions corresponding to each of the second strongest coefficients; the terminal sends the reference basis vector positions corresponding to each of the second strongest coefficients rather than the reference basis vector position corresponding to the first strongest coefficient, where the first strongest coefficient is a PMI combination coefficient with strongest energy and/or maximum amplitude among the PMI combination coefficients of a transmission layer $l$ associated with all the reference resources. That is, in this optional implementation, the terminal does not feed back the reference basis vector position of the first strongest coefficient but feeds back the basis vector positions of the second strongest coefficients corresponding to other reference resources.

Optionally, basis vector positions of the second strongest coefficients corresponding to the other reference resources are the differences of the basis vector position of each second strongest coefficient relative to an initial position of a basis vector window associated with each resource.

In a possible implementation, determining the priority of the PMI combination coefficient according to a first reference basis vector position includes at least one of the following:

(1) for the plurality of PMI combination coefficients with a same transmission layer, a same associated reference resource, same $\pi(f_t)$, and different associated indices, determining the priority of the PMI combination coefficient according to a spatial domain beam index associated with the PMI combination coefficient, where the smaller the associated spatial domain beam index, the higher the priority of the PMI combination coefficient;

(2) for the plurality of PMI combination coefficients with a same associated reference resource, a same associated spatial domain beam index, same $\pi(f_t)$, and different corresponding transmission layers, determining the priority of the PMI combination coefficient according to a transmission layer corresponding to the PMI combination coefficient, where the smaller the transmission layer, the priority of the PMI combination coefficient higher;

(3) for the plurality of PMI combination coefficients with a same transmission layer, a same associated reference resource, a same associated spatial domain beam index, and different $\pi(f_t)$, determining the priority of the PMI combination coefficient according to $\pi(f_t)$ of the PMI combination coefficient, where the smaller $\pi(f_t)$, the priority of the PMI combination coefficient higher;

(4) for the plurality of PMI combination coefficients with different transmission layers, same associated reference resources, same associated spatial domain beam indices, and different $\pi(f_t)$, determining the priority of the PMI combination coefficient according to $\pi(f_t)$ of the PMI combination coefficient, where the smaller $\pi(f_t)$, the priority of the PMI combination coefficient higher;

(5) for the plurality of PMI combination coefficients with a same transmission layer, a same associated reference resource, different associated spatial domain beam indices, and same $\pi(f_t)$, determining the priority of the PMI combination coefficient according to a spatial domain beam index associated with the PMI combination coefficient, where the smaller the associated spatial domain beam index, the higher the priority of the PMI combination coefficient;

(6) for the plurality of PMI combination coefficients with different transmission layers, different associated reference resources, different associated spatial domain beam indices, and same $\pi(f_t)$, determining the priority of the PMI combination coefficient according to a spatial domain beam index associated with the PMI combination coefficient, where the smaller the associated spatial domain beam index, the higher the priority of the PMI combination coefficient; and

(7) for the plurality of PMI combination coefficients with different transmission layers, different associated reference resources, different associated spatial domain beam indices, and different $\pi(f_t)$, determining the priority of the PMI combination coefficient according to $\pi(f_t)$ of the PMI combination coefficient, where the smaller $\pi(f_t)$, the priority of the PMI combination coefficient higher;

where

$$\pi(f_t) = min\left(2*\left(n_{3,l}^{(f_t)} - n_{3,l}^{(f_{t,ref})}\right), 2*\left(N_3 - (n_{3,l}^{(f_t)} - n_{3,l}^{(f_{t,ref})})\right)\right) - 1;$$

$l$ is a transmission layer corresponding to the PMI combination coefficient, $l \in 0,1, ..., v$ - 1, $v$ is a rank of PMI;

$t$ indicates that the PMI combination coefficient is a PMI combination coefficient associated with a $t$ + 1$^{th}$ reference resource on the transmission layer $l$, $t \in 0,1, ..., T$ - 1, and T is the number of reference resources;

$f_t$ is the number of basis vectors selected by the terminal associated with a $t^{th}$ reference resource, $f_t \in 0,1, ..., M_{v,t}$- 1, and $M_{v,t}$ is the number of basis vectors selected by the terminal associated with the $t^{th}$ reference resource;

$n_{3,l}^{(f_{t,ref})}$ is a reference basis vector position associated with the $t^{th}$ reference resource on the transmission layer $l$; and

$n_{3,l}^{(f_t)}$ is a basis vector position associated with $f_t$ at the transmission layer $l$, $n_{3,l}^{(f_t)} \in 0,1, ..., N_3 - 1, N_3$ represents the number of basis vectors.

For example, the priority Pri($l$, $i_t$, $f_t$) of the PMI combination coefficient may be determined according to the following formula:

$$\text{Pri}(l, i_t, f_t) = 2 * \sum_{t=0}^{T-1} L_t * v * \pi(f_t) + v * i_t + l;$$

$l$ is a transmission layer corresponding to the PMI combination coefficient, $l \in 0,1, ..., v$ - 1, $v$ is a rank of PMI;

$t$ indicates that the PMI combination coefficient is a PMI combination coefficient associated with a $t$ + 1$^{th}$ reference resource on the transmission layer $l$, $t \in 0,1, ..., T$ - 1, and T is the number of reference resources;

$i$ is a spatial domain beam index associated with the PMI combination coefficient;

$i_t$ is an index of beams associated with a tth reference resource, where if t > 0,

$$i_t = \sum_{k=0}^{t-1} L_k + \hat{i}_t$$

, and if t = 0, $i_t = \hat{i}_t$,
$\hat{i}_t \in 0,1,\ldots, 2L_t - 1$;

$L_k$ is the number of beams associated with a kth reference resource;

$L_t$ is the number of beams associated with the tth reference resource;

$f_t$ is an index of a basis vector selected by the terminal associated with the tth reference source, $f_t \in 0,1,\ldots,M_{v,t} - 1$, and

$M_{v,t}$ is the number of basis vectors selected by the terminal associated with the tth reference resource.

In a possible implementation, the number of beams associated with each of the reference resources may be the same. In this case, the foregoing formula may be written as:

$$\mathrm{Pri}(l, i, f_t) = 2 * L * T * v * \pi(f_t) + v * i + l$$

where $i = 0,1, \ldots , 2TL - 1$, L is the number of beams associated with each reference resource.

In a possible implementation, in a case that one of the reference basis vectors corresponds to one reference resource and the reference resources corresponding to the plurality of reference basis vector positions are not exactly same, the priority of the PMI combination coefficient is irrelevant to the transmission layer.

For example, in a case that one of the reference basis vectors corresponds to one reference resource and the reference resources corresponding to the plurality of reference basis vector positions are not exactly same, the priority of the PMI combination coefficient may be determined according to one of the following priority rules:

for the plurality of PMI combination coefficients with a same associated reference resource, same $\pi(f_t)$, and different associated spatial domain beam indices, determining the priority of the PMI combination coefficient according to a spatial domain beam index associated with the PMI combination coefficient, where the smaller the associated index, the higher the priority of the PMI combination coefficient;

for the plurality of PMI combination coefficients with a same associated reference resource, a same associated spatial domain beam index, and different $\pi(f_t)$, determining the priority of the PMI combination coefficient according to $\pi(f_t)$ of the PMI combination coefficient, where the smaller $\pi(f_t)$, the priority of the PMI combination coefficient higher;

for the plurality of PMI combination coefficients with a same associated reference resource, different associated spatial domain beam indices, and same $\pi(f_t)$, determining the priority of the PMI combination coefficient according to a spatial domain beam index associated with the PMI combination coefficient, where the smaller the associated spatial domain beam index, the higher the priority of the PMI combination coefficient;

for the plurality of PMI combination coefficients with different associated reference resources, different associated spatial domain beam indices, and same $\pi(f_t)$, determining the priority of the PMI combination coefficient according to a spatial domain beam index associated with the PMI combination coefficient, where the smaller the associated spatial domain beam index, the higher the priority of the PMI combination coefficient; and

for the plurality of PMI combination coefficients with different associated reference resources, different associated spatial domain beam indices, and different $\pi(f_t)$, determining the priority of the PMI combination coefficient according to $\pi(f_t)$ of the PMI combination coefficient, where the smaller $\pi(f_t)$, the priority of the PMI combination coefficient higher.

Optionally, when one reference basis vector position corresponds to one reference resource and is irrelevant to the transmission layer (layer), a formula for determining the PMI combination coefficient may be written as:

$$\mathrm{Pri}(l, i_t, f_t) = 2 * \sum_{t=0}^{T-1} L_t * v * \pi(f_t) + v * i_t + l$$

where

$$\pi(f_t) = min\left(2 * \left(n_{3,l}^{(f_t)} - n_3^{(f_{t,ref})}\right), 2 * \left(N_3 - (n_{3,l}^{(f_t)} - n_3^{(f_{t,ref})})\right) - 1\right).$$

$n_3^{(f_{t,ref})}$ is a reference delay position associated with a (t+1)th reference resource and is irrelevant to the value of the transmission layer $l$.

In a possible implementation, prior to determining the priority of the PMI combination coefficient according to a first reference basis vector position, the method includes: acquiring a sum $L_{sum}$ of numbers of beams associated with all the reference resources configured by a network side device. In this possible implementation, a formula for determining the PMI combination coefficient may be written as:

$$\mathrm{Pri}(l, i_t, f_t) = 2 * \mathrm{L}_{sum} * \mathrm{v} * \pi(f_t) + v * i_t + l$$

where $L_{sum}$ represents the sum of the numbers of beams associated with all the first reference resources configured by the network.

In one or more possible implementations, in S214, mapping the plurality of PMI combination coefficients to a second part of a channel state information (CSI) report in a descending order of priority includes: in a case that the number of non-zero combination coefficients corresponding to each of the reference resources is fed back in a first part of the CSI report, mapping, by the terminal, first PMI combination coefficients with priorities higher than a preset value corresponding to each of the reference resources in a first group of the second part of the CSI report and mapping second PMI combination coefficients corresponding to each of the reference resources to a second group of the second part, where the second PMI combination coefficients are PMI combination coefficients other than the first PMI combination coefficients. In this possible implementation, after determining the priority of the PMI combination coefficient through the first reference basis vector position, the terminal may feed back the number of non-zero combination coefficients corresponding to each reference resource in the first part (part1) of the CSI report, and feed back each PMI combination coefficient in the second part of the CSI report. A Group 1 in the part2 of the CSI report includes coefficients with high priorities among the non-zero combination coefficients corresponding to each first reference resource, and the remaining non-zero combination coefficients corresponding to each first reference resource is mapped into a Group2 of the part2.

Optionally, the number of first PMI combination coefficients with a priority higher than a preset value corresponding to one reference resource is the ceiling of the number of non-zero combination coefficients corresponding to the reference resource divided by two, or the number of first PMI combination coefficients with a priority higher than a preset value corresponding to one reference resource is a difference between the ceiling of the number of non-zero combination coefficients corresponding to the reference resource divided by two and a rank value. For example, a number N of first PMI combination coefficients with priorities higher than the preset value corresponding to one reference resource may be:

$$\mathrm{N} = \left\lfloor \frac{\text{the number of non}-\text{zero combination coefficients corresponding to the reference resource}}{2} \right\rfloor,$$

or,

$$\mathrm{N} = \left\lfloor \frac{\text{the number of non}-\text{zero combination coefficients corresponding to the reference resource}}{2} \right\rfloor - rank;$$

where *rank* is a rank value of PMI.

Optionally, the first part of the CSI report may include a plurality of bit fields, the number of the bit fields is equal to the number of the reference resources, and a length of each of the bit fields is determined by preset information. The preset information includes the number of beams associated with the reference resources, weighting coefficients not greater than 1 associated with the reference resources, and the number of basis vectors shared by all the reference resources. That is to say, when the Part1 of the CSI report may feed back the number of the non-zero combination coefficients corresponding to each first reference resource, the part1 of the CSI report includes a plurality of bit fields. The number of the bit fields is equal to the number of the first reference resources. The length of each field depends on the number of beams associated with the first reference resources, the weighting coefficients not greater than 1 associated with the first reference resources, and the number of basis vectors shared by all the first reference resources.

In another possible implementation, in S212, determining the priority of the PMI combination coefficient may include: acquiring a combination coefficient priority weighting coefficient $\alpha$ corresponding to the first reference resources, where the first reference resource is a reference resource associated with the PMI combination coefficient; and determining the priority of the PMI combination coefficient according to the combination coefficient priority weighting coefficient $\alpha$.

In the foregoing possible implementation, the priority Pri(l, i, f) of the PMI combination coefficient may be determined according to the following formula:

$$\mathrm{Pri}(l, \mathrm{i}, \mathrm{f}) = \alpha(2 * \mathrm{L} * v * \pi(f) + v * i + l);$$

where *l* is a transmission layer corresponding to the PMI combination coefficient, $l \in 0, 1, ..., v$ - 1, *v* is a rank of PMI;

$$\pi(f) = min\left(2 * n_{3,l}^{(f)}, 2 * \left(N_3 - n_{3,l}^{(f)}\right) - 1\right), \quad n_{3,l}^{(f)}$$ is a reference basis vector position associated with a reference resource on the transmission layer *l*; and

L is the number of beams associated with the reference resource on the transmission layer *l*.

Of course, it is not limited thereto. In actual application, the priority of the PMI combination coefficient may also be determined by using other similar formulae according to the combination coefficient priority weighting coefficient α, which is not limited specifically in embodiments of this application.

In a possible implementation, acquiring a combination coefficient priority weighting coefficient α corresponding to the first reference resource may include: acquiring strength information of a PMI combination coefficient corresponding to the first reference resource; and determining the combination coefficient priority weighting coefficient α according to the strength information, where the stronger the PMI combination coefficient, the smaller the combination coefficient priority weighting coefficient α. In this possible implementation, the combination coefficient priority weighting coefficient α is determined according to the strength information of a PMI combination coefficient corresponding to the first reference resource, so that the terminal can feed back a strongest PMI combination coefficient corresponding to TRP, thereby facilitating subsequent data transmission and scheduling.

In the foregoing possible implementation, optionally, acquiring the strength information of a PMI combination coefficient corresponding to the first reference resource may include: acquiring strength information of a PMI combination coefficient with strongest energy or maximum amplitude among the PMI combination coefficients corresponding to the first reference resource. That is to say, the strength of the PMI combination coefficient corresponding to the reference resource is related to the PMI combination coefficient with strongest energy or maximum amplitude among the PMI combination coefficients associated with each reference resource. That is, each reference resource is associated with one strongest PMI combination coefficient, and the weighting coefficients are assigned in sequence according to the strongest PMI combination coefficients in a descending order of strength.

Optionally, when a plurality of strongest PMI combination coefficients associated with a plurality of reference resources are the same in amplitude or energy, the weighting coefficients may be assigned according to strengths of amplitude and energy of a plurality of second strongest PMI combination coefficients associated with the plurality of reference resources.

In the foregoing possible implementation, it may also be that the network side device configure a related combination coefficient weighting coefficient for each reference resource. Therefore, acquiring a combination coefficient priority weighting coefficient α corresponding to the first reference resource includes: acquiring a combination coefficient priority weighting coefficient α configured by the network side device for the first reference resource. A combination coefficient weighting coefficient related to a strongest reference resource is minimum, a combination coefficient weighting coefficient related to a weakest reference resource is maximum, and a combination coefficient priority is separately calculated for the PMI combination coefficients related to each reference resource.

In a possible implementation, in S214, mapping the plurality of PMI combination coefficients to the second part of the channel state information (CSI) report according to a descending order of priority may include:

mapping, by the terminal, first PMI combination coefficients with priorities higher than a preset value corresponding to each of the reference resources in a first group of the second part of the CSI report and mapping second PMI combination coefficients corresponding to each of the reference resources to a second group of the second part, where the second PMI combination coefficients are PMI combination coefficients other than the first PMI combination coefficients, and the number of the first PMI combination coefficients mapped in the first group is the ceiling of a sum of number of non-zero PMI combination coefficients corresponding to all the reference resources divided by two. For example, when the priority of the PMI combination coefficient is related to the combination coefficient priority weighting coefficient α, the terminal may sequence the non-zero PMI combination coefficients associated with all the reference resources. The Group1 of the part2 of the CSI report includes the combination coefficients with high priorities among all the non-zero combination coefficients, and the number of the combination coefficients is the ceiling of the sum of the number of the non-zero combination coefficients corresponding to all the reference resources divided by two.

In a possible implementation, the method may further include: the terminal sends first indication information to the network side device, where the first indication information is used to indicate a strength order of the PMI combination coefficients corresponding to each of the reference resources; and the terminal sends second indication information in the first part of the CSI report, where the second indication information is used to indicate the sum of the number of the non-zero PMI combination coefficients corresponding to all the reference resources. In this possible implementation, the terminal indicates the strength order of the combination coefficients corresponding to all the reference resources to the network side device, so that the network side device may acquire the number of the non-zero combination coefficients fed back by each reference resource.

In another possible implementation, in S212, determining the priority of the PMI combination coefficient may include: determining the priority of the PMI combination coefficient according to a position of the PMI combination coefficient among all the PMI combination coefficients associated with the first reference resources, where the first reference resource is a reference resource associated with the PMI combination coefficient. For example, for a PMI combination coefficient a, the terminal may determine the reference resource associated with the first PMI combination coefficient as a reference resource 1, then may determine all PMI combination coefficients (i.e., PMI combination coefficients a-d) associated with the reference resource 1 according to the reference resource 1, and may determine the priority of the PMI combination coefficient a according to a position of the PMI combination coefficient among the PMI combination coefficients a-d. For example, the PMI combination coefficient a is a PMI combination coefficient with highest priority among the PMI combination coefficients a-d.

For example, the priority of the PMI combination coefficient may be determined according to the following formula:

$$\mathrm{Pri}(l, \mathrm{i}, \mathrm{f}) = 2 * \mathrm{L} * \mathrm{v} * \pi(f) + v * i + l$$

where $\pi(f) = min\left(2 * n_{3,l}^{(f)}, 2 * \left(N_3 - n_{3,l}^{(f)}\right) - 1\right)$, $l = 0,1, ..., v$ - 1, i = 0,1, ... , 2L - 1, f = 0,1, ... , $M_v$ - 1.

It can be seen from formula $\pi(f)$ that its value range is $\pi(f) \in 0,1, ..., N_3$-1, and an $n_{3,l}^{(f)}$ order of values from smallest to largest is 0, $N_3$ - 1,1, $N_3$ - 2,2, $N_3$ - 3 ....

It can be seen from formula Pri(l, i, f) that a weight of $\pi(f)$ is maximum, followed by the spatial domain beam index $i$ associated with the PMI combination coefficient and the transmission layer $l$. Therefore, it can be seen that a descending order of priority is shown in table 2.

Table 2.

| Priorities in a descending order | First coefficient of 2L coefficients of a first layer of a first delay |
| | ... |
| | First coefficient of 2L coefficients of a $l^{th}$ layer of the first delay |
| | ... |

| 2L$^{th}$ coefficient of 2L coefficients of the first layer of the first delay |
| --- |
| ... |
| 2L$^{th}$ coefficient of 2L coefficients of the $l^{th}$ layer of the first delay |
| ... |
| First coefficient of 2L coefficients of a first layer of a $N_3{}^{th}$ delay |
| ... |
| First coefficient of 2L coefficients of a $l^{th}$ layer of the $N_3{}^{th}$ delay |
| ... |
| 2L$^{th}$ coefficient of 2L coefficients of the 1$^{th}$ layer of the $N_3{}^{th}$ delay |
| ... |
| 2L$^{th}$ coefficient of 2L coefficients of the $l^{th}$ layer of the $N_3{}^{th}$ delay |
| ... |

In the foregoing possible implementation, optionally, in S214, mapping the plurality of PMI combination coefficients to the second part of the CSI report according to the descending order of priority includes: in a case that the number of non-zero combination coefficients corresponding to each of the reference resources is fed back in a first part of the channel state information (CSI) report, mapping, by the terminal, first PMI combination coefficients with priorities higher than a preset value corresponding to each of the reference resources in a first group of the second part of the CSI report and mapping second PMI combination coefficients corresponding to each of the reference resources to a second group of the second part, where the second PMI combination coefficients are PMI combination coefficients other than the first PMI combination coefficients. The Part1 of the CSI report feeds back the number of the non-zero combination coefficients corresponding to each first reference resource. In this optional implementation, the terminal includes PMI combination coefficients with high priorities among the non-zero combination coefficients corresponding to each first reference resource in the Group1 in the part2 of the CSI report, and the remaining non-zero combination coefficients corresponding to each first reference resource is mapped into the Group2 of the part2.

Optionally, the number of first PMI combination coefficients with a priority higher than a preset value corresponding to one of the reference resources is the ceiling of the number of non-zero combination coefficients corresponding to the reference resource divided by two, or the number of first PMI combination coefficients with a priority higher than a preset value corresponding to one reference resource is a difference between the ceiling of the number of non-zero combination coefficients corresponding to the reference resource divided by two and a rank value.

In the foregoing possible implementation, optionally, mapping priorities of non-zero PMI combination coefficients corresponding to the plurality of reference resources in the first group and the second group may be determined according to at least one of the following:

(1) A configuration order of each of the reference resources configured by the network side device; for example, the first PMI combination coefficients associated with each reference resource are mapped in the first group according to the configuration order of each reference resource, and the second PMI combination coefficients associated with each reference resource are mapped in the second group according to the configuration order of each reference resource.

(2) A feedback order of each of the reference resources assigned by the network side device; for example, the network side device may indicate a feedback order of each reference resource and the terminal may map the first PMI combination coefficients associated with each reference resource in the first group and map the second PMI combination coefficients associated with each reference resource in the second group according to an indication of the network side device.

(3) Default information; for example, sorting may be performed according to resource identities (ID) associated with the reference resources or time slot shifts or symbol shifts of the reference resources; according to an order of sorted reference resources, the first PMI combination coefficients associated with each reference resource are mapped in the first group, and the second PMI combination coefficients associated with each reference resources are mapped in the second group.

(4) A feedback order of each of the reference resources indicated by the terminal through third indication information. That is, it is related to an order corresponding to a plurality of reference resources displayed or implicitly fed back by the terminal. For example, the terminal may feed back an order corresponding to a plurality of reference resources through a CRI indication, or the terminal may feed back the order corresponding to the plurality of reference resources through a new bit field in the CSI part1, or the terminal may implicitly determine a feedback order by feeding back the strength of the strongest coefficients of the plurality of reference resources, or the terminal may implicitly determine the feedback order by feeding back the amplitude of the basis vector shifts corresponding to the plurality of reference resources.

In another possible implementation, in S212, determining the priority of the PMI combination coefficient may include: determining the priority of the PMI combination coefficient according to a priority related to a first reference resource associated with the PMI combination coefficient. That is, the priority of the PMI combination coefficient is determined according to the priorities related to the reference resources associated with the PMI combination coefficient.

In a possible implementation, determining the priority of the PMI combination coefficient according to a priority of a first reference resource associated with the PMI combination coefficient includes:

determining the priority $\text{Pri}(l, i_t, f_t)$ of the PMI combination coefficient according to the following formula:

$$\text{Pri}(l, i_t, f_t) = 2 * \sum_{t=0}^{T-1} \text{L}_t * \text{v} * \pi(f_t) + v * i_t + l;$$

where

$$\pi(f_t) = min\left(2 * n_{3,l}^{(f_t)}, 2 * \left(N_3 - n_{3,l}^{(f_t)}\right) - 1\right);$$

$l$ is a transmission layer corresponding to the PMI combination coefficient, $l \in 0,1, ..., v$ - 1, $v$ is a rank of PMI;
$t$ indicates that the PMI combination coefficient is a PMI combination coefficient associated with a $t$ + 1th reference resource on the transmission layer $l$, $t \in 0,1, ..., T$ - 1, and T is the number of reference resources;

$i$ is an index of the PMI combination coefficient;

$i_t$ is an index of beams associated with a $t^{th}$ reference resource, where if $t > 0$, $i_t = \sum_{k=0}^{t-1} L_k + \hat{i}_t$, and if $t = 0$, $it = \hat{i}_t$, $\hat{i}_t \in 0, 1, \ldots, 2L_t - 1$;

$L_k$ is the number of beams associated with a $k^{th}$ reference resource;

$L_t$ is the number of beams associated with the $t^{th}$ reference resource;

$f_t$ is an index of a basis vector selected by the terminal associated with the $t^{th}$ reference source, $f_t \in 0, 1, \ldots, M_{v,t} - 1$, and $M_{v,t}$ is the number of basis vectors selected by the terminal associated with the $t^{th}$ reference resource; and

$n_{3,l}^{(f)}$ is a reference basis vector position associated with the reference resource on the transmission layer $l$.

In a possible implementation, the method may further include: the terminal determines the priority related to the first reference resource according to at least one of the following:

(1) a resource ID of the first reference resource, where the smaller the resource ID is, the higher the priority related to the first reference resource is.

(2) the number of the non-zero PMI combination coefficients associated with the first reference resource, for example, the greater the number of the associated non-zero PMI combination coefficients, the higher the priority related to the first reference resource; optionally, the number of the non-zero PMI combination coefficients corresponding to first reference resource may be fed back through one of the following: sending a non-zero coefficient indication in the second part of the CSI report, where the non-zero coefficient indication is used to indicate the number of the non-zero PMI combination coefficients corresponding to each of the reference resources; and sending indication information of the number of the non-zero PMI combination coefficients corresponding to each of the reference resources in the first part of the CSI report. The network side device may acquire a non-zero coefficient indication, and in this case, the non-zero indication is fed back in CSI part2 group 0 or group1. Further, if the numbers of the non-zero coefficients associated with a plurality of reference resources are the same, priorities are determined according to an order of IDs of the reference resources. The network side device may also determine the priorities of the reference resources through the number of the non-zero coefficients of each reference resource fed back in Part 1.

(3) An order of the first reference resources indicated in the first part of the CSI part, for example, a priority order related to the reference resources is the same as an order of the reference resources indicated in the first part of the CSI report.

(4) A priority of the first reference resource configured by the network side device.

(5) A PMI combination coefficient with strongest energy or maximum amplitude associated with the first reference resource. For example, the priority order related to each reference resource may be sorted according to a PMI combination coefficient with strongest energy or maximum amplitude associated with each reference resources. Optionally, the terminal may feed back the PMI combination coefficient with strongest energy or maximum amplitude associated with each reference resource.

(6) A sum of amplitudes/or a sum of energy of a plurality of PMI combination coefficients associated with the first reference resource. For example, the priority order related to each reference resource may be sorted according to a sum of amplitude or energy of the coefficients associated with the reference resources. Optionally, the terminal may feed back the priority order related to the reference resources to the network side device. For example, the terminal sends the indication information that indicates the priority order related to the reference resources.

(7) A sum of amplitudes/or a sum of energy of PMI combination coefficients of the first reference resource on a preset spatial domain beam. For example, the priority order related to the reference resources may be sorted according to the sum of amplitudes or energy of the PMI combination coefficients of the reference resources in the same spatial domain beam correspondingly. Optionally, the terminal may feed back the priority order related to the reference resources to the network side device. For example, the terminal sends the indication information that indicates the priority order related to the reference resources.

(8) A sum of amplitudes/or a sum of energy of PMI combination coefficients of the first reference resource on a preset frequency domain basis vector. For example, the priority order related to each reference resources may be sorted according to the sum of amplitudes or energy of coefficients corresponding to each reference resource on a same frequency domain basis vector. Optionally, the terminal may feed back the priority order related to the reference resources to the network side device. For example, the terminal sends the indication information that indicates the priority order related to the reference resources.

Through the technical solution provided in the embodiments of this application, the priorities among multi-point coordinated transmissions may be taken into account when the priorities of the PMI combination coefficients are determined. This can, as much as possible, avoid the situation where high priority elements of a certain or some TRPs fed back are not elements with strongest energy or power, thereby guaranteeing that coefficients with higher energy or amplitude have a higher feedback priority.

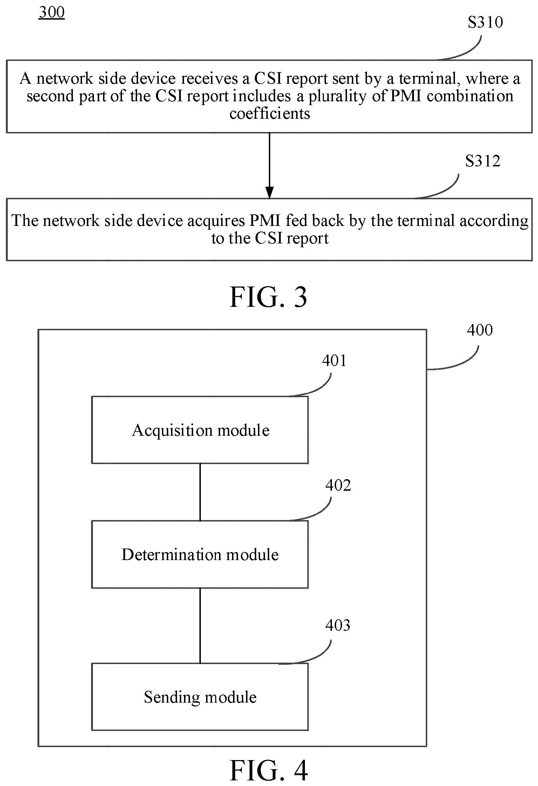

Corresponding to the foregoing method 200, an embodiment of this application further provides a PMI acquisition method. The method may be executed by a network side device. As shown in FIG. 3, the method 300 mainly includes the following steps:

S310, a network side device receives a CSI report sent by a terminal, where a second part of the CSI report includes a plurality of PMI combination coefficients; and

S312, the network side device acquires PMI fed back by the terminal according to the CSI report.

In a possible implementation, prior to S310, the method may further include: the network side device configures a plurality of reference resources for the terminal.

In a possible implementation, prior to S310, the method may further include: the network side device configures a combination coefficient priority weighting coefficient $\alpha$ corresponding to each reference resource for the terminal. In S312, the network side device may determine reference resources corresponding to PMI combination coefficients with high priorities according to the combination coefficient priority weighting coefficient $\alpha$ configured for each reference resource.

In a possible implementation, the method further includes: the network side device receives first indication information sent by the terminal, where the first indication information is used to indicate a strength order of the PMI combination coefficients corresponding to each reference resource; and receives second indication information sent by the terminal in a first part of the CSI report, where the second indication information is used to indicate the sum of the number of the non-zero PMI combination coefficients corresponding to all the reference resources; and the network side device determines the PMI combination coefficients associated with each of the reference resources according to the first indication information and the second indication information.

In a possible implementation, the first part of the CSI report includes the number of the non-zero combination coefficients corresponding to each reference resource, a first group of the second part of the CSI report includes first PMI combination coefficients with priorities higher than a preset value, and the a second group of the second part includes PMI combination coefficients other than the first PMI combination coefficients.

In a possible implementation, prior to S310, the method may further include: the network side device sends indication information that indicates a feedback order of each of the reference resources to the terminal. The network side device may, based on the feedback order, determine the reference resources corresponding to each PMI combination coefficient in the second part of the CSI report.

In a possible implementation, prior to S310, the method may further include: the network side device configures indication information of a feedback order of each of the reference resources for the terminal. The network side device may, based on the feedback order, determine the reference resources corresponding to each PMI combination coefficient in the second part of the CSI report.

In a possible implementation, the method further includes: the network side device receives third indication information sent by the terminal, where the third indication information is used to indicate the feedback order of the reference resources. The network side device may, based on the feedback order, determine the reference resources corresponding to each PMI combination coefficient in the second part of the CSI report.

The technical solution provided in this application will be described below in conjunction with specific implementations.

Implementation I

The terminal acquires a joint channel through a plurality of first reference resources and acquires corresponding precoding matrix information by means of the joint channel, where the precoding matrix information includes a combination coefficient matrix, and the dimensions of the combination coefficient matrix are as follows: the number of rows is a sum $2LT$ of number of beams associated with each first reference resource, where T represents the number of the first reference resources, and the number of column is delay data configured by the network (i.e., a number N3 of the basis vectors). Since the combination coefficient matrix is sparse, the terminal may feed back the combination coefficient associated with each first reference resource. In this case, one way of feedback is to feed back a delay position (a position among N3 basis vectors, from 0 to N3-1) where a strongest coefficient associated with each first reference resource is located and a non-zero coefficient indication associated with each first reference resource. This way of feedback may, in a case that the combination coefficient matrix is relatively sparse, effectively reduce the feedback overhead. Alternatively, another way of feedback is to feed back a delay position (a position among N3 basis vectors, from 0 to N3-1) where a strongest coefficient associated with each first reference resource is located and a non-zero coefficient indication in one combination coefficient associated with all the first reference resources. Since prior to feeding back amplitudes and phases of these non-zero coefficients, the terminal further needs to associate each non-zero coefficient with a priority value. The lower the priority value, the higher the priority of the non-zero coefficient. When generating part2 of the CSI report, the non-zero coefficients with higher priority are mapped (transmitted) first. Therefore, based on this way of feedback, it needs to determine a priority value for each combination coefficient. One way of determination is to assign a global priority value to all the non-zero combination coefficients, i.e., there are no two non-zero coefficients with a same priority value. Assuming that the terminal feeds back delay positions where a plurality of strongest combination coefficients are located for each first reference resource, each strongest combination coefficient corresponds to one transmission layer, and in this case, a calculation formula for the priority value is as follows:

$$\mathrm{Pri}(l, i_t, f_t) = 2 * \mathrm{L} * \mathrm{T} * \mathrm{v} * \pi(f_t) + v * i_t + l$$

where

$$\pi(f_t) = min\left(2 * \left(n_{3,l}^{(f_t)} - n_{3,l}^{(f_{t,ref})}\right), 2 * \left(N_3 - (n_{3,l}^{(f_t)} - n_{3,l}^{(f_{t,ref})})\right)\right) - 1).$$

The priority value corresponding to each non-zero combination coefficient is calculated according to the formula. It can be seen that when t=0 (a 1st first reference resource), a coefficient with maximum priority value is a $n_{3,l}^{(f_{0,ref})\mathrm{th}}$ coefficient in a first row of the combination coefficients; when t=1 (a second first reference resource), ta coefficient with maximum priority value is a $n_{3,l}^{(f_{1,ref})\mathrm{th}}$ coefficient in a (L+1)th row of the combination coefficient; and when t=2 (a third first reference resource), a coefficient with maximum priority value is a $n_{3,l}^{(f_{2,ref})\mathrm{th}}$ coefficient in a (2L+1)th row of the combination coefficients, and so on.

If the network indicates or defaults that the terminal feeds back the number of the non-zero coefficients associated with each first reference resource in the Part1 of the CSI report, in this case, Group1 in the Part2 of the CSI report includes the following number of combination coefficients: the ceiling of the number of the non-zero coefficients associated with each first reference resource divided by two, or the ceiling of the number of the non-zero combination coefficients corresponding to each first reference resource divided by two minus the rank value. These combination coefficients are combination coefficients with higher priorities in each first reference resource, the remaining combination coefficients are mapped in CSI Group2, and the combination coefficients mapped in the Group1 are mapped according to a descending order of priority. The combination coefficients mapped in the Group2 are mapped in a descending order of priority of the combination coefficients in the Group2.

Implementation II

The terminal acquires a joint channel through a plurality of first reference resources and acquires corresponding precoding matrix information by means of the joint channel, where the precoding matrix information includes a combination coefficient matrix, and the dimensions of the combination coefficient matrix are as follows: the number of rows is a sum 2LT of number of beams associated with each first reference resource, where T represents the number of the first reference resources, and the number of columns is delay data configured by the network (i.e., a number N3 of the basis vectors). Since the combination coefficient matrix is sparse, the terminal may feed back the combination coefficient associated with each first reference resource. In this case, one way of feedback is to feed back a delay position (a position among N3 basis vectors, from 0 to N3-1) where a strongest coefficient associated with each first reference resource is located and a non-zero coefficient indication associated with each first reference resource. Moreover, this way of feedback will move the delay position where the strongest coefficient associated with each first reference resource is located to a position of delay 0. This way of feedback may, in a case that the combination coefficient matrix is relatively sparse, effectively reduce the feedback overhead. Since prior to feeding back amplitudes and phases of these non-zero coefficients, the terminal further needs to associate each non-zero coefficient with a priority value. The lower the priority value, the higher the priority of the non-zero coefficient. When generating part2 of the CSI report, the non-zero coefficients with higher priority are mapped (transmitted) first. Therefore, based on this way of feedback, it needs to determine a priority value for each combination coefficient. One way of determination is as follows: the terminal assigns weighting coefficients for the combination coefficients related to each first reference resource, where a weighting coefficient of a combination coefficient related to a strongest first reference resource is minimum and a weighting coefficient of a combination coefficient related to a weakest first reference resource is maximum. The weighting coefficients may be pre-defined or indicated by the network through high-level signaling. Alternatively, the network assigns the weighting coefficients for the combination coefficients related to each first reference resource in advance.

Combination coefficient priorities are separately calculated for the combination coefficients related to each first reference resource, and the calculation mode is as follows: (in this case, parameters in the formula are parameters associated with related first reference resource)

$$\text{Pri}(l, i, f) = \alpha(2 * L * v * \pi(f) + v * i + l)$$

where $\alpha$ represents a priority weighting coefficient associated with a certain first reference resource.

A priority value corresponding to each non-zero combination coefficient is calculated according to the formula, and it can be seen that, overall, the priority of the combination coefficient associated with a first reference resource with smaller $\alpha$ is higher than that of the combination coefficient associated with a first reference resource with greater $\alpha$.

If the terminal assigns the weighting coefficients for the combination coefficients related to each first reference resource, to determine a strength relationship of the combination coefficients corresponding to each first reference resource, the terminal assigns the weighting coefficients in sequence by acquiring combination coefficient with strongest energy or maximum amplitude among the combination coefficients related to each first reference resource according to an order from the from the strong to weak of the strongest combination coefficients associated with each first reference resource, where a weighting coefficient of a combination coefficient related to the strongest first reference resource is minimum and a weighting coefficient of a combination coefficient related to the weakest first reference resource is maximum.

Particularly, when a plurality of strongest combination coefficients associated with a plurality of first reference resources are the same in amplitude or energy, the weighting coefficients may be assigned according to the intensities of the amplitude and energy of a plurality of second strongest combination coefficients associated with the plurality of first reference resources.

According to the priority formula, the terminal sorts the non-zero PMI combination coefficients associated with all the first reference resources. The Group1 of the part2 of the CSI report includes combination coefficients with high priorities in all the non-zero combination coefficients, and the number is the ceiling of the sum of the number of the non-zero combination coefficients corresponding to all first reference resources divided by two. In this case, if the terminal assigns the weighting coefficients for the combination coefficients related to each first reference resource, the terminal further needs to indicate a strength order of the combination coefficients corresponding to all the first reference resources to the network, so that the network acquires the number of the non-zero combination coefficients fed back by each first reference resource. Moreover, the part1 of the CSI report includes the sum of the number of the non-zero combination coefficients corresponding to all the first reference resources.

Implementation III

The terminal acquires a joint channel through a plurality of first reference resources and acquires corresponding precoding matrix information by means of the joint channel, where the precoding matrix information includes a combination coefficient matrix, and the dimensions of the combination coefficient matrix are as follows: the number of rows is a sum 2LT of number of beams associated with each first reference resource, where T represents the number of the first reference resources, and the number of columns is delay data configured by the network (i.e., a number N3 of the basis vectors). Since the combination coefficient matrix is sparse, the terminal may feed back the combination coefficient associated with each first reference resource. In this case, one way of feedback is to feed back a delay position (a position among N3 basis vectors, from 0 to N3-1) where a strongest coefficient associated with each first reference resource is located and a non-zero coefficient indication associated with each first reference resource. Moreover, this way of feedback will move the delay position where the strongest coefficient associated with each first reference resource is located to a position of delay 0. This way of feedback may, in a case that the combination coefficient matrix is relatively sparse, effectively reduce the feedback overhead. Since prior to feeding back amplitudes and phases of these non-zero coefficients, the terminal further needs to associate each non-zero coefficient with a priority value. The lower the priority value, the higher the priority of the non-zero coefficient. When generating part2 of the CSI report, the non-zero coefficients with higher priority are mapped (transmitted) first. Therefore, based on this way of feedback, it needs to determine a priority value for each combination coefficient. One way of determination is as follows: the terminal calculates combination coefficient priorities for the combination coefficients related to each first reference resource, and the calculation mode is as follows:

$$\text{Pri}(l, i, f) = 2 * L * v * \pi(f) + v * i + l$$

in this case, parameters in the formula are parameters associated with related first reference resource.

According to the formula, it may be possible that the combination coefficients related to different first reference resources have the same priority. In this case, the Group1 in the part2 of the CSI report includes coefficients with high priorities among the non-zero combination coefficients corresponding to each first reference resource, and the number is the ceiling of the number of non-zero combination coefficients corresponding to each first reference resource divided by two, or the ceiling of the number of non-zero combination coefficients corresponding to each first reference resource divided by two minus the rank value. The remaining non-zero combination coefficients corresponding to each first reference resource are mapped into the Group2 of the part2.

For mapping priorities of the non-zero combination coefficients corresponding to a plurality of first reference resources in the Group 1 and Group2 of the Part2, the terminal may sort the mapping priorities according to resource IDs corresponding to the first reference resources, where the mapping priorities of resources with smaller resource IDs are higher. Alternatively, the terminal may sort according to an order of a plurality of first reference resources configured by the network, where the first reference resources configured earlier have higher mapping priorities.

The number of the non-zero combination coefficients corresponding to each first reference resource needs to be mapped into the part1 of the CSI report. The network decodes the part2 of the CSI report according to the number of the non-zero coefficients of each reference resource and a mapping order of the coefficients of a plurality of reference resources, so as to acquire the non-zero coefficients corresponding to all the first reference resources.

An executing main body for the PMI combination coefficient sending method provided in the embodiments of this application may be a PMI combination coefficient sending apparatus. By taking a situation that the PMI combination coefficient sending apparatus executes the PMI combination coefficient sending method as an example in an embodiment of this application, the PMI combination coefficient sending apparatus provided in the embodiments of this application is described.

FIG. 4 is a schematic structural diagram of a PMI combination coefficient sending apparatus in an embodiment of this application. As shown in FIG. 4, the apparatus mainly includes: an acquisition module 401, a determination module 402, and a sending module 403.

In an embodiment of this application, the acquisition module 401 is configured to acquire a plurality of PMI combination coefficients to be fed back under coordinated transmission of a plurality of reference resources; the determination module 402 is configured to, for each of the PMI combination coefficient, determine a priority of the PMI combination coefficient; and the sending module 403 is configured to map the plurality of PMI combination coefficients to a second part of a channel state information (CSI) report according to a descending order of priority for sending.

In a possible implementation, that the determination module determines the priority of the PMI combination coefficient includes: determining the priority of the PMI combination coefficient according to a first reference basis vector position, where the first reference basis vector position is a reference basis vector position corresponding to the PMI combination coefficient among a plurality of reference basis vector positions.

In a possible implementation, one of the reference basis vectors corresponds to one of the reference resources and the reference resources corresponding to the plurality of reference basis vector positions are not exactly same.

In a possible implementation, the plurality of reference basis vectors correspond to a same reference resource, and the plurality of reference basis vector positions correspond to a plurality of transmission layers one by one.

In a possible implementation, the first reference basis vector position is associated with a basis vector position corresponding to a first strongest coefficient, where the first strongest coefficient is a PMI combination coefficient with strongest energy and/or maximum amplitude among all the PMI combination coefficients associated with all the reference resources.

In a possible implementation, the acquisition module 401 is further configured to acquire a difference of each second reference basis vector position among at least one second reference basis vector position relative to the reference basis vector position corresponding to the first strongest coefficient, where the second reference basis vector position is a reference basis vector position among the plurality of reference basis vector positions, and the at least one second reference basis vector position does not include the reference basis vector position corresponding to the first strongest coefficient; and the sending module is further configured to send at least one difference.

In a possible implementation, the first reference basis vector position is associated with a basis vector positions corresponding to a plurality of second strongest coefficients, where the plurality of second strongest coefficients include a PMI combination coefficient with strongest energy and/or maximum amplitude among the PMI combination coefficients associated with each of the first reference resources.

In a possible implementation, the acquisition module is further configured to acquire a reference basis vector positions corresponding to each of the second strongest coefficients; the sending module is further configured to send the reference basis vector positions corresponding to each of the second strongest coefficients rather than the reference basis vector position corresponding to the first strongest coefficient, where the first strongest coefficient is a PMI combination coefficient with strongest energy and/or maximum amplitude among the PMI combination coefficients associated with all the reference resources.

In a possible implementation, determining the priority of the PMI combination coefficient according to a first reference basis vector position includes at least one of the following:

for the plurality of PMI combination coefficients with a same transmission layer, a same associated reference

resource, same $\pi(f_t)$ , and different associated indices, determining the priority of the PMI combination coefficient according to a spatial domain beam index associated with the PMI combination coefficient, where the smaller the associated spatial domain beam index, the higher the priority of the PMI combination coefficient;

for the plurality of PMI combination coefficients with a same associated reference resource, a same associated spatial domain beam index, same $\pi(f_t)$ , and different corresponding transmission layers, determining the priority of the PMI combination coefficient according to a transmission layer corresponding to the PMI combination coefficient, where the smaller the transmission layer, the priority of the PMI combination coefficient higher;

for the plurality of PMI combination coefficients with a same transmission layer, a same associated reference resource, a same associated spatial domain beam index, and different $\pi(f_t)$, determining the priority of the PMI combination coefficient according to $\pi(f_t)$ of the PMI combination coefficient, where the smaller $\pi(f_t)$, the priority of the PMI combination coefficient higher;

for the plurality of PMI combination coefficients with different transmission layers, same associated reference resources, same associated spatial domain beam indices, and different $\pi(f_t)$, determining the priority of the PMI combination coefficient according to $\pi(f_t)$ of the PMI combination coefficient, where the smaller $\pi(f_t)$, the priority of the PMI combination coefficient higher;

for the plurality of PMI combination coefficients with a same transmission layer, a same associated reference resource, different associated spatial domain beam indices, and same $\pi(f_t)$, determining the priority of the PMI combination coefficient according to a spatial domain beam index associated with the PMI combination coefficient, where the smaller the associated spatial domain beam index, the higher the priority of the PMI combination coefficient;

for the plurality of PMI combination coefficients with different transmission layers, different associated reference resources, different associated spatial domain beam indices, and same $\pi(f_t)$, determining the priority of the PMI combination coefficient according to a spatial domain beam index associated with the PMI combination coefficient, where the smaller the associated spatial domain beam index, the higher the priority of the PMI combination coefficient; and

for the plurality of PMI combination coefficients with different transmission layers, different associated reference resources, different associated spatial domain beam indices, and different $\pi(f_t)$, determining the priority of the PMI combination coefficient according to $\pi(f_t)$ of the PMI combination coefficient, where the smaller $\pi(f_t)$, the priority of the PMI combination coefficient higher;

where

$$\pi(f_t) = min\left(2 * \left(n_{3,l}^{(f_t)} - n_{3,l}^{(f_{t,ref})}\right), 2 * \left(N_3 - (n_{3,l}^{(f_t)} - n_{3,l}^{(f_{t,ref})})\right) - 1\right);$$

$l$ is a transmission layer corresponding to the PMI combination coefficient, $l \in 0,1, ..., v$ - 1, $v$ is a rank of PMI;

$t$ indicates that the PMI combination coefficient is a PMI combination coefficient associated with a $t$ + 1$^{th}$ reference resource on the transmission layer $l$, $t \in 0,1, ..., T$ - 1, and T is the number of reference resources;

$f_t$ is an index of a basis vector selected by the terminal associated with a $t^{th}$ reference source, $f_t \in 0,1,...,M_{v,t}$ - 1, and $M_{v,t}$ is the number of basis vectors selected by the terminal associated with the $t^{th}$ reference resource;

$n_{3,l}^{(f_{t,ref})}$ is a reference basis vector position associated with a $(t+1)^{th}$ reference resource on the transmission layer $l$; and

$n_{3,l}^{(f_t)}$ is a basis vector position associated with $f_t$ at the transmission layer $l$, $n_{3,l}^{(f_t)} \in 0,1, ..., N_3 - 1$, $N_3$ represents the number of basis vectors.

In a possible implementation, the number of beams associated with each of the reference resources is the same.

In a possible implementation, in a case that one of the reference basis vectors corresponds to one reference resource and the reference resources corresponding to the plurality of reference basis vector positions are not exactly same, the priority of the PMI combination coefficient is irrelevant to the transmission layer.

In a possible implementation, the acquisition module is further configured to acquire a sum $L_{sum}$ of the number of beams associated with all the reference resources configured by a network side device.

In a possible implementation, mapping the plurality of PMI combination coefficients to the second part of the channel state information (CSI) report according to the descending order of priority includes:

in a case that the number of non-zero combination coefficients corresponding to each of the reference resources is fed back in a first part of the CSI report, mapping, by the terminal, first PMI combination coefficients with priorities higher than a preset value corresponding to each of the reference resources in a first group of the second part of the CSI report and mapping second PMI combination coefficients corresponding to each of the reference resources to a second group of the second part, where the second PMI combination coefficients are PMI combination coefficients other than the first PMI combination coefficients.

In a possible implementation, the number of first PMI combination coefficients with a priority higher than a preset value corresponding to one reference resource is the ceiling of the number of non-zero combination coefficients corresponding to the reference resource divided by two, or the number of first PMI combination coefficients with a priority higher than a preset value corresponding to one reference resource is a difference between the ceiling of the number of non-zero combination coefficients corresponding to the reference resource divided by two and a rank value.

In a possible implementation, the first part of the CSI report includes a plurality of bit fields, the number of the bit fields is equal to the number of the reference resources, and a length of each of the bit field is determined by preset information. The preset information includes the number of beams associated with the reference resources, weighting coefficients not greater than 1 associated with the reference resources, and the number of basis vectors shared by all the reference resources.

In a possible implementation, that the determination module determines the priority of the PMI combination coefficients includes: acquiring a combination coefficient priority weighting coefficient $\alpha$ corresponding to the first reference resource, where the first reference resource is a reference resources associated with the PMI combination coefficient;

determining the priority of the PMI combination coefficient according to the combination coefficient priority weighting coefficient $\alpha$.

In a possible implementation, that the determination module determines the priority of the PMI combination coefficient includes: determining the priority of the PMI combination coefficient according to a position of the PMI combination coefficient among all the PMI combination coefficients associated with the first reference resource, where the first reference resource is a reference resource associated with the PMI combination coefficient.

In a possible implementation, determining the priority of the PMI combination coefficient according to the combination coefficient priority weighting coefficient $\alpha$ includes:

determining the priority Pri(l, i, f) of the PMI combination coefficient according to the following formula:

$$\mathrm{Pri}(l, \mathrm{i}, \mathrm{f}) = \alpha(2 * \mathrm{L} * v * \pi(f) + v * i + l);$$

where $l$ is a transmission layer corresponding to the PMI combination coefficient, $l \in 0,1, ..., v$ - 1, $v$ is a rank of PMI;

$$\pi(f) = min\left(2 * n_{3,l}^{(f)}, 2 * \left(N_3 - n_{3,l}^{(f)}\right) - 1\right), \ n_{3,l}^{(f)}$$ is a reference basis vector position associated with a reference resource on the transmission layer $l$; and

L is the number of beams associated with the reference resource on the transmission layer $l$.

In a possible implementation, acquiring a combination coefficient priority weighting coefficient $\alpha$ corresponding to the first reference resource includes:

acquiring strength information of a PMI combination coefficient corresponding to the first reference resource; and determining the combination coefficient priority weighting coefficient $\alpha$ according to the strength information, where the stronger the PMI combination coefficient, the smaller the combination coefficient priority weighting coefficient $\alpha$.

In a possible implementation, acquiring strength information of the PMI combination coefficient corresponding to the first reference resource includes:

acquiring strength information of a PMI combination coefficient with strongest energy or maximum amplitude among the PMI combination coefficients corresponding to the first reference resource.

In a possible implementation, acquiring a combination coefficient priority weighting coefficient $\alpha$ corresponding to the first reference resource includes:

acquiring a combination coefficient priority weighting coefficient $\alpha$ configured by the network side device for the first reference resource.

In a possible implementation, mapping the plurality of PMI combination coefficients to the second part of the channel state information (CSI) report according to a descending order of priority includes:

mapping first PMI combination coefficients with priorities higher than a preset value corresponding to each of the reference resources in a first group of the second part of the CSI report and mapping second PMI combination coefficients corresponding to each of the reference resources to a second group of the second part, where the second PMI combination coefficients are PMI combination coefficients other than the first PMI combination coefficients, and the number of the first PMI combination coefficients mapped in the first group is the ceiling of a sum of number of non-zero PMI combination coefficients corresponding to all the reference resources divided by two.

In a possible implementation, the sending module is further configured to send first indication information to the network side device, where the first indication information is used to indicate a strength order of the PMI combination coefficients corresponding to each of the reference resources; and the terminal sends second indication information in the first part of the CSI report, where the second indication information is used to indicate the sum of the number of the non-zero PMI combination coefficients corresponding to all the reference resources.

In a possible implementation, that the determination module determines the priority of the PMI combination coefficient includes:
determining the priority of the PMI combination coefficient according to a priority of a first reference resource associated with the PMI combination coefficient.

In a possible implementation, mapping the plurality of PMI combination coefficients to the second part of the channel state information (CSI) report according to the descending order of priority includes:
in a case that the number of non-zero combination coefficients corresponding to each of the reference resources is fed back in a first part of the CSI report, mapping, by the terminal, first PMI combination coefficients with priorities higher than a preset value corresponding to each of the reference resources in a first group of the second part of the CSI report and mapping second PMI combination coefficients corresponding to each of the reference resources to a second group of the second part, where the second PMI combination coefficients are PMI combination coefficients other than the first PMI combination coefficients.

In a possible implementation, the number of first PMI combination coefficients with a priority higher than a preset value corresponding to one of the reference resources is the ceiling of the number of non-zero combination coefficients corresponding to the reference resource divided by two, or the number of first PMI combination coefficients with a priority higher than a preset value corresponding to one reference resource is a difference between the ceiling of the number of non-zero combination coefficients corresponding to the reference resource divided by two and a rank value.

In a possible implementation, mapping priorities of non-zero PMI combination coefficients corresponding to the plurality of reference resources in the first group and the second group are determined according to at least one of the following:

a configuration order of each of the reference resources configured by the network side device;
a feedback order of each of the reference resources assigned by the network side device;
default information; and
a feedback order of each of the reference resources indicated through third indication information.

In a possible implementation, determining a priority of the PMI combination coefficient includes:
determining the priority of the PMI combination coefficient according to a priority of a first reference resource associated with the PMI combination coefficient.

In a possible implementation, determining the priority of the PMI combination coefficient according to a priority of a first reference resource associated with the PMI combination coefficient includes:

determining the priority $\text{Pri}(l, i_t, f_t)$ of the PMI combination coefficient according to the following formula:

$$\text{Pri}(l, i_t, f_t) = 2 * \sum_{t=0}^{T-1} \text{L}_t * v * \pi(f_t) + v * i_t + l;$$

where

$$\pi(f_t) = min\left(2 * n_{3,l}^{(f_t)}, 2 * \left(N_3 - n_{3,l}^{(f_t)}\right) - 1\right);$$

$l$ is a transmission layer corresponding to the PMI combination coefficient, $l \in 0,1, ..., v$ - 1, $v$ is a rank of PMI;
$t$ indicates that the PMI combination coefficient is a PMI combination coefficient associated with a $t$ + 1$^{th}$ reference resource on the transmission layer $l$, $t \in 0,1, ..., T$ - 1, and T is the number of reference resources;
$i$ is an index of the PMI combination coefficient;

$i_t$ is an index of beams associated with a $t^{th}$ reference resource, where if t > 0, $i_t = \sum_{k=0}^{t-1} \text{L}_k + \hat{\imath}_t$, and if t = 0, it = $\hat{\imath}_t$, $\hat{\imath}_t \in 0,1, ..., 2L_t$ - 1;
$\text{L}_k$ is the number of beams associated with a $k^{th}$ reference resource;
$\text{L}_t$ is the number of beams associated with the $t^{th}$ reference resource;
$f_t$ is the number of basis vectors selected by the terminal associated with the $t^{th}$ reference resource, $f_t \in 0,1, ..., M_{v,t}$ - 1, and $M_{v,t}$ is the number of basis vectors selected by the terminal associated with the $t^{th}$ reference resource; and

$n_{3,l}^{(f)}$ is a reference basis vector position associated with the reference resource on the transmission layer $l$.

In a possible implementation, the determination module determines the priorities related to the first reference resources according to at least one of the following:

a resource ID of the first reference resource, where the smaller the resource ID is, the higher the priority related to the first reference resource is;
the number of non-zero PMI combination coefficients associated with the first reference resource;
an order of the first reference resource indicated in a first part of the CSI report;
a priority of the first reference resource configured by the network side device;
a PMI combination coefficient with strongest energy or maximum amplitude associated with the first reference resource;
a sum of amplitudes/or a sum of energy of a plurality of PMI combination coefficients associated with the first reference resource;
a sum of amplitudes/or a sum of energy of PMI combination coefficients of the first reference resource on a preset spatial domain beam; and
a sum of amplitudes/or a sum of energy of PMI combination coefficients of the first reference resource on a preset frequency domain basis vector.

In a possible implementation mode, the sending module is further configured to:

in a case that an order of priority related to the first reference resource is determined according to the number of the non-zero PMI combination coefficients corresponding to the first reference resource, feed back the number of the non-zero PMI combination coefficients corresponding to the first reference resource by one of the following:
sending a non-zero coefficient indication in the second part of the CSI report, where the non-zero coefficient indication is used to indicate the number of the non-zero PMI combination coefficient corresponding to the reference resource; and
sending indication information of the number of non-zero PMI combination coefficients corresponding to each of the reference resources in the first part of the CSI report.

The PMI combination coefficient sending apparatus in the embodiments of this application may be an electronic device, for example, an electronic device with an operating system, or may be a component in the electronic device, for example, an integrated circuit or a chip. The electronic device may be either a terminal or another device other than the terminal. Exemplarily, the terminal may include, but not limited to, the type of the terminal 11 enumerated, and the another device may be a server, a network attached storage (Network Attached Storage, NAS) and the like, which are not specifically limited in the embodiments of this application.

The PMI combination coefficient sending apparatus provided in the embodiments of this application can implement various processes implemented by the method embodiment in FIG. 2. To avoid repetition, details are not described herein again.

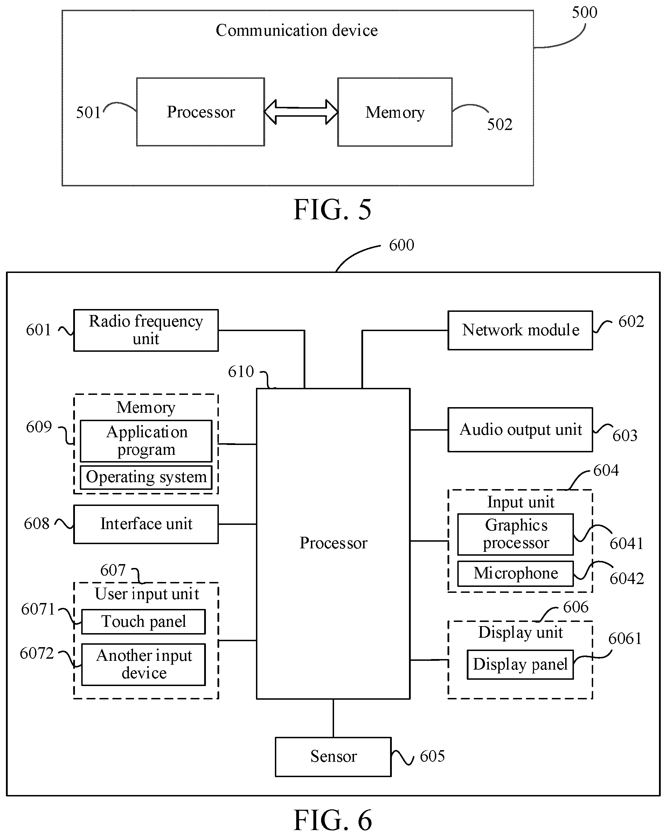

Optionally, as shown in FIG. 5, an embodiment of this application further provides a communication device 500, including a processor 501 and a memory 502, where the memory 502 stores programs or instructions runnable in the processor 501. For example, when the communication device 500 is a terminal, the programs or instructions, when executed by the processor 501, implement the steps of the PMI combination coefficient sending method embodiment and can achieve the same technical effect. When the communication device 500 is a network side device, the programs or instructions, when executed by the processor 501, implement the steps of the PMI combination coefficient sending method embodiment and can achieve the same technical effect. To avoid repetition, it is not described repeatedly herein.

An embodiment of this application further provides a terminal, including a processor and a communication interface, where the processor is configured to implement the steps of the PMI combination coefficient sending method embodiment and the communication interface is configured to communicate with an external device. The terminal embodiment corresponds to the method embodiment at the terminal side, and various implementation processes and implementations of the above method embodiment are applicable to the terminal embodiment and can achieve the same technical effect. Specifically, FIG. 6 is a schematic structural diagram of a hardware structure of a terminal according to an embodiment of this application.

The terminal 600 includes, but is not limited to, at least a part of components such as a radio frequency unit 601, a network module 602, an audio output unit 603, an input unit 604, a sensor 605, a display unit 606, a user input unit 607, an interface unit 608, a memory 609, and a processor 610.

A person skilled in the art may understand that the terminal 600 may further include a power supply (such as a battery) that supplies power to various components. The power supply may be logically connected to the processor 610 through a power management system, thus implementing functions of charging management, discharging management, and power consumption management through the power management system. The terminal structure shown in FIG. 6 does not constitute any limitation on the terminal, and the terminal may include more or fewer components than shown, or combine some components, or have different component arrangements.

It is to be understood that in this embodiment of this application, the input unit 604 may include a graphics processing unit (Graphics Processing Unit, GPU) 6041 and a microphone 6042, and the GPU 6041 processes image data of a static picture or video obtained by an image capturing apparatus (such as a camera) in a video capture mode or an image capture mode. The display unit 606 may include a display panel 6061. The display panel 6061 may be configured by using a liquid crystal display, an organic light-emitting diode, or the like. The user input unit 607 includes at least one of a touch panel 6071 and another input device 6072. The touch panel 6071 is also referred to as a touchscreen. The touch panel 6071 may include two parts: a touch detection apparatus and a touch controller. The another input device 6072 may include, but is not limited to, a physical keyboard, a functional key (such as a volume control key or a switch key), a track ball, a mouse, and a joystick. Details are not described herein again.

In an embodiment of this application, after receiving downlink data from the network side device, the radio frequency unit 601 can transmit the downlink data to the processor 610 for processing. In addition, the radio frequency unit 601 may send uplink data to the network side device. Generally, the radio frequency unit 601 includes, but is not limited to, an antenna, an amplifier, a transceiver, a coupler, a low noise amplifier, a duplexer, and the like.

The memory 609 may be configured to store a software program and various data. The memory 609 may mainly include a first storage area for storing a program or instruction, and a second storage area for storing data, where the first storage area may store an operating system, at least one application program or instruction required for a function (such as a sound playback function and an image playback function), and the like Besides, the memory 609 may be a volatile memory or a non-volatile memory, or the memory 609 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The non-volatile memory may be a random access memory (Random Access Memory, RAM), a static random access memory (Static RAM, SRAM) a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 609 in this embodiment of this application includes but is not limited to these memories and any other suitable types of memories.

The processor 610 may include one or more processing units. Optionally, the processor 610 may integrate an application processor and a modem processor, The application processor mainly processes operations involving an operating system, a user interface, an application program, and the like, and the modem processor mainly processes wireless communication signals, for example, a base band processor. It may be understood that the foregoing modem processor may not be integrated into the processor 610.

The processor 610 is configured to acquire a plurality of PMI combination coefficients to be fed back under coordinated transmission of a plurality of reference resources; and for each of the PMI combination coefficients, determine a priority of the PMI combination coefficient;

The radio frequency unit 601 is configured to map the plurality of PMI combination coefficients to a second part of a channel state information (CSI) report according to a descending order of priority for sending.

An embodiment of this application further provides a network side device, including a processor and a communication interface, where the processor is configured to implement the steps in the foregoing method 300 and the communication interface is configured to communicate with an external device. The network side device embodiment corresponds to the network side device method embodiment, and various implementation processes and implementations of the above method embodiment are applicable to the network side device embodiment and can achieve the same technical effect.

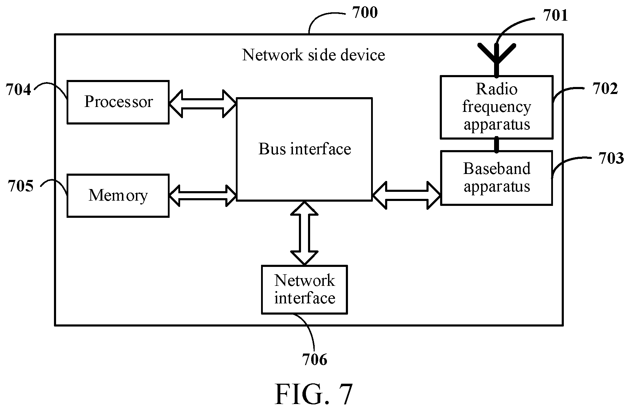

Specifically, an embodiment of this application further provides a network side device. As shown in FIG. 7, the network side device 700 includes: an antenna 701, a radio frequency apparatus 702, a base band apparatus 703, a processor 704 and a memory 705. The antenna 701 is connected to the radio frequency apparatus 702. In an uplink direction, the radio frequency apparatus 702 receives information through the antenna 701 and sends the received information to the base band apparatus 703 for processing. In a downlink direction, the base band apparatus 703 processes information to be sent and sends the information to the radio frequency apparatus 702. The received information processed by the radio frequency apparatus 702 is sent through the antenna 701.

The method executed by the network side device in the above embodiments may be implemented in the base band apparatus 703. The base band apparatus 703 includes a base band processor.

The base band apparatus 703 may, for example, include at least one base band board. A plurality of chips are arranged on the base band board. As shown in FIG. 7, one of the chips is, for example, the base band processor connected to the memory 705 through a bus interface to call the program in the memory 705, so as to execute the network side device operation shown in the above method embodiment.

The network side device may further include a network interface 706. The interface is, for example, a common public ratio interface (common public radio interface, CPRI).

Specifically, the network side device 700 in an embodiment of this application further includes: an instruction or a program stored in the memory 705 and capable of being run in the processor 704, where the processor 704 calls the instruction or program in the memory 705 to execute the steps of the foregoing method 300 and achieves the same technical effect. To avoid repetition, details are not described herein again.

An embodiment of this application further provides a readable storage medium, storing a program or an instruction, where the program or the instruction, when executed by a processor, implements various processes of the foregoing PMI combination coefficient sending method embodiment and can achieve the same technical effects. To avoid repetition, details are not described herein again.

The processor may be a processor of the terminal in foregoing embodiments. The readable storage medium includes a computer readable storage medium such as a Read-Only Memory (ROM), a Random Access Memory (RAM), a magnetic disk, or an optical disc.

An embodiment of this application further provides a chip, including a processor and a communication interface, where the communication interface is coupled to the processor, and the processor is configured to run a program or an instruction to implement various processes of the foregoing PMI combination coefficient sending method embodiment and can achieve the same technical effect. To avoid repetition, details are not described herein again.

It is to be understood that the chip mentioned in the embodiments of this application may also be referred to as a system on a chip, a system chip, a chip system, a system-on-chip, or the like.

An embodiment of this application further provides a computer program/program product, stored in a storage medium. The computer program/program product is executed by at least one processor to implement various processes of the foregoing PMI combination coefficient sending method embodiment and can achieve the same technical effect. To avoid repetition, details are not described herein again.

An embodiment of this application further provides a transmission system for PMI combination coefficients, including a terminal and a network side device, where the terminal may be configured to execute the steps of the foregoing PMI combination coefficient sending method, and the network side device may be configured to execute the steps of the above PMI acquisition method.

It is to be noted that the terms "including", "containing" or any other variation thereof used herein are intended to cover non-exclusive inclusion, so that a process, method, article or apparatus including a series of elements includes not only those elements, but also other elements not explicitly listed, or elements inherent to the process, method, article or apparatus. Without more limitations, an element defined by a sentence "including one" does not exclude a case that there are still other same elements in the process, method, article, or apparatus that includes the element. In addition, it is be pointed out that the range of the method and apparatus in the implementation of this application is not limited to execution of functions in order shown or discussed, and may further include execution of functions involved in a substantially simultaneous manner or in reverse order. For example, the described method may be executed in order different from that described, and various steps may also be added, omitted, or combined. Moreover, features described with reference to some examples may be combined in other examples.

According to the descriptions in the foregoing implementations, persons skilled in the art may clearly learn that the method according to the foregoing embodiment may be implemented by relying on software and a commodity hardware platform or by using hardware. Based on such an understanding, the technical solutions of this application essentially, or the part contributing to the prior art, may be presented in the form of a software product. The computer software product is stored in a storage medium (for example, a ROM/RAM, a magnetic disk, or an optical disc) including several instructions to enable a terminal (which may be a mobile phone, a computer, a server, a network device, or the like) to perform the methods described in the embodiments of this application.

The embodiments of this application have been described above with reference to the accompanying drawings. This application is not limited to the specific embodiments described above, and the specific embodiments described above are merely exemplary and not limitative. Persons of ordinary skill in the art may make various variations under the teaching of the present disclosure without departing from the spirit of this application and the protection scope of the claims, and such variations shall all fall within the protection scope of this application.

**Claims**

1. A precoding matrix indicator (PMI) combination coefficient sending method, comprising:

acquiring, by a terminal, a plurality of PMI combination coefficients to be fed back under coordinated transmission of a plurality of reference resources;

for each of the PMI combination coefficients, determining a priority of the PMI combination coefficient; and

mapping the plurality of PMI combination coefficients to a second part of a channel state information (CSI) report according to a descending order of priority for sending.

2. The method according to claim 1, wherein determining a priority of the PMI combination coefficient comprises: determining the priority of the PMI combination coefficient according to a first reference basis vector position, wherein the first reference basis vector position is a reference basis vector position corresponding to the PMI combination coefficient among a plurality of reference basis vector positions.

3. The method according to claim 2, wherein one of the reference basis vectors corresponds to one of the reference resources, and the reference resources corresponding to the plurality of the reference basis vector positions are not exactly same.

4. The method according to claim 2, wherein the plurality of reference basis vectors correspond to a same reference resource, and the plurality of reference basis vector positions correspond to a plurality of transmission layers one by one.

5. The method according to claim 3 or 4, wherein the first reference basis vector position is associated with a basis vector position corresponding to a first strongest coefficient, and wherein the first strongest coefficient is a PMI combination coefficient with strongest energy and/or maximum amplitude among all the PMI combination coefficients associated with all the reference resources.

6. The method according to claim 5, further comprising:

acquiring, by the terminal, a difference of each second reference basis vector position among at least one second reference basis vector position relative to a reference basis vector position corresponding to the first strongest coefficient, wherein the second reference basis vector position is a reference basis vector position among the plurality of reference basis vector positions, and the at least one second reference basis vector position does not comprise the reference basis vector position corresponding to the first strongest coefficient; and

sending, by the terminal, the at least one difference.

7. The method according to claim 3 or 4, wherein the first reference basis vector position is associated with basis vector positions corresponding to a plurality of second strongest coefficients, and wherein the plurality of second strongest coefficients comprise a PMI combination coefficient with strongest energy and/or maximum amplitude among PMI combination coefficients associated with each of the first reference resources.

8. The method according to claim 7, further comprising:

acquiring, by the terminal, reference basis vector positions corresponding to each of the second strongest coefficients; and

sending, by the terminal, the reference basis vector positions corresponding to each of the second strongest coefficients and skipping sending the reference basis vector position corresponding to the first strongest coefficient, wherein the first strongest coefficient is a PMI combination coefficient with strongest energy and/or maximum amplitude among PMI combination coefficients associated with all the reference resources.

9. The method according to claim 3 or 4, wherein determining the priority of the PMI combination coefficient according to a first reference basis vector position comprises at least one of the following:

for the plurality of PMI combination coefficients with a same transmission layer, a same associated reference resource, same $\pi(f_t)$, and different associated indices, determining the priority of the PMI combination coefficient according to a spatial domain beam index associated with the PMI combination coefficient, wherein the smaller the associated spatial domain beam index, the higher the priority of the PMI combination coefficient;

for the plurality of PMI combination coefficients with a same associated reference resource, a same associated spatial domain beam index, same $\pi(f_t)$, and different corresponding transmission layers, determining the priority of the PMI combination coefficient according to a transmission layer corresponding to the PMI combination coefficient, wherein the smaller the transmission layer, the priority of the PMI combination coefficient higher;

for the plurality of PMI combination coefficients with a same transmission layer, a same associated reference resource, a same associated spatial domain beam index, and different $\pi(f_t)$, determining the priority of the PMI combination coefficient according to $\pi(f_t)$ of the PMI combination coefficient, wherein the smaller $\pi(f_t)$, the priority of the PMI combination coefficient higher;

for the plurality of PMI combination coefficients with different transmission layers, same associated reference resources, same associated spatial domain beam indices, and different $\pi(f_t)$, determining the priority of the PMI combination coefficient according to $\pi(f_t)$ of the PMI combination coefficient, wherein the smaller $\pi(f_t)$, the priority of the PMI combination coefficient higher;

for the plurality of PMI combination coefficients with different transmission layers, a same associated reference resource, different associated spatial domain beam indices, and same $\pi(f_t)$, determining the priority of the PMI combination coefficient according to a spatial domain beam index associated with the PMI combination coefficient, wherein the smaller the associated spatial domain beam index, the higher the priority of the PMI combination coefficient;

for the plurality of PMI combination coefficients with different transmission layers, different associated reference resources, different associated spatial domain beam indices, and same $\pi(f_t)$, determining the priority of the PMI combination coefficient according to a spatial domain beam index associated with the PMI combination coefficient, wherein the smaller the associated spatial domain beam index, the higher the priority of the PMI combination coefficient; and

for the plurality of PMI combination coefficients with different transmission layers, different associated reference resources, different associated spatial domain beam indices, and different $\pi(f_t)$, determining the priority of the PMI combination coefficient according to $\pi(f_t)$ of the PMI combination coefficient, wherein the smaller $\pi(f_t)$, the priority of the PMI combination coefficient higher;

wherein

$$\pi(f_t) = min\left(2 * \left(n_{3,l}^{(f_t)} - n_{3,l}^{(f_{t,ref})}\right), 2 * \left(N_3 - \left(n_{3,l}^{(f_t)} - n_{3,l}^{(f_{t,ref})}\right)\right) - 1\right);$$

$l$ is a transmission layer corresponding to the PMI combination coefficient, $l \in 0,1, ... , v$ - 1, $v$ is a rank of PMI;

$t$ indicates that the PMI combination coefficient is a PMI combination coefficient associated with a $(t + 1)^{th}$ reference resource on the transmission layer $l$, $t \in 0,1, ... , T$ - 1, and T is the number of reference resources;

$f_t$ is an index of a basis vector selected by the terminal associated with a $t^{th}$ reference source, $f_t \in 0,1, ... , M_{v,t}$ - 1, and $M_{v,t}$ is the number of basis vectors selected by the terminal associated with the $t^{th}$ reference resource;

$n_{3,l}^{(f_{t,ref})}$ is a reference basis vector position associated with a $(t+1)^{th}$ reference resource on the transmission layer $l$; and

$n_{3,l}^{(f_t)}$ is a basis vector position associated with $f_t$ at the transmission layer $l$, $n_{3,l}^{(f_t)} \in 0,1, ... , N_3$ - 1, wherein $N_3$ represents the number of basis vectors.

10. The method according to claim 9, wherein the number of beams associated with each of the reference resources is the same.

11. The method according to claim 9, wherein in a case that one of the reference basis vectors corresponds to one reference resource and the reference resources corresponding to the plurality of reference basis vector positions are not exactly same, the priority of the PMI combination coefficient is irrelevant to the transmission layer.

12. The method according to any one of claims 9 to 11, wherein prior to determining the priority of the PMI combination coefficient according to a first reference basis vector position, the method comprises: acquiring a sum $L_{sum}$ of the numbers of beams associated with all the reference resources configured by a network side device.

13. The method according to any one of claims 2 to 12, wherein mapping the plurality of PMI combination coefficients to a second part of a channel state information (CSI) report according to a descending order of priority comprises:

in a case that the number of non-zero combination coefficients corresponding to each of the reference resources is fed back in a first part of the CSI report, mapping, by the terminal, first PMI combination coefficients with priorities higher than a preset value corresponding to each of the reference resources in a first group of the second part of the CSI report and mapping second PMI combination coefficients corresponding to each of the reference resources to a second group of the second part, wherein the second PMI combination coefficients are PMI combination coefficients other than the first PMI combination coefficients.

14. The method according to claim 13, wherein the number of first PMI combination coefficients with a priority higher than a preset value corresponding to one reference resource is the ceiling of the number of non-zero combination coefficients corresponding to the reference resource divided by two, or the number of first PMI combination coefficients with a priority higher than a preset value corresponding to one reference resource is a difference between the ceiling of the number of non-zero combination coefficients corresponding to the reference resource divided by two and a rank value.

15. The method according to claim 13, wherein the first part of the CSI report comprises a plurality of bit fields, the number of the bit fields is equal to the number of the reference resources, and a length of each of the bit fields is determined by preset information, and wherein the preset information comprises the number of beams associated with the reference resources, weighting coefficients not greater than 1 associated with the reference resources, and the number of basis vectors shared by all the reference resources.

16. The method according to claim 1, wherein determining a priority of the PMI combination coefficient comprises:

acquiring a combination coefficient priority weighting coefficient $\alpha$ corresponding to the first reference resource, wherein the first reference resource is a reference resource associated with the PMI combination coefficient; and determining the priority of the PMI combination coefficient according to the combination coefficient priority weighting coefficient $\alpha$.

17. The method according to claim 16, wherein determining the priority of the PMI combination coefficient according to the combination coefficient priority weighting coefficient $\alpha$ comprises:

determining the priority Pri(l, i, f) of the PMI combination coefficient according to the following formula:

$$\mathrm{Pri}(l, \mathrm{i}, \mathrm{f}) = \alpha(2 * \mathrm{L} * v * \pi(f) + v * i + l);$$

wherein $l$ is a transmission layer corresponding to the PMI combination coefficient, $l \in 0,1, \ldots , v$ - 1, $v$ is a rank of PMI;

$$\pi(f) = min\left(2 * n_{3,l}^{(f)}, 2 * \left(N_3 - n_{3,l}^{(f)}\right) - 1\right), \ n_{3,l}^{(f)}$$ is a reference basis vector position associated with a reference resource on the transmission layer $l$; and
L is the number of beams associated with the reference resource on the transmission layer $l$.

18. The method according to claim 16, wherein acquiring a combination coefficient priority weighting coefficient $\alpha$ corresponding to the first reference resource comprises:

acquiring strength information of a PMI combination coefficient corresponding to the first reference resource; and determining the combination coefficient priority weighting coefficient $\alpha$ according to the strength information, wherein the stronger the PMI combination coefficient, the smaller the combination coefficient priority weighting coefficient $\alpha$.

19. The method according to claim 18, wherein acquiring strength information of a PMI combination coefficient corresponding to the first reference resource comprises:
acquiring strength information of a PMI combination coefficient with strongest energy or maximum amplitude among the PMI combination coefficients corresponding to the first reference resource.

20. The method according to claim 16, wherein acquiring a combination coefficient priority weighting coefficient $\alpha$ corresponding to the first reference resource comprises:
acquiring a combination coefficient priority weighting coefficient $\alpha$ configured by the network side device for the first reference resource.

21. The method according to claim 16, wherein mapping the plurality of PMI combination coefficients to a second part of a channel state information (CSI) report according to a descending order of priority comprises:

mapping, by the terminal, first PMI combination coefficients with priorities higher than a preset value corresponding to each of the reference resources in a first group of the second part of the CSI report and mapping second PMI combination coefficients corresponding to each of the reference resources in a second group of the second part, wherein the second PMI combination coefficients are PMI combination coefficients other than the first PMI combination coefficients, and the number of the first PMI combination coefficients mapped in the first group is the ceiling of a sum of number of non-zero PMI combination coefficients corresponding to all the reference resources divided by two.

22. The method according to claim 21, further comprising:

sending, by the terminal, first indication information to the network side device, wherein the first indication information is used to indicate a strength order of the PMI combination coefficients corresponding to each of the reference resources; and
sending, by the terminal, second indication information in the first part of the CSI report, wherein the second indication information is used to indicate the sum of the number of the non-zero PMI combination coefficients corresponding to all the reference resources.

23. The method according to claim 1, wherein determining a priority of the PMI combination coefficient comprises:
determining the priority of the PMI combination coefficient according to a position of the PMI combination coefficient among all the PMI combination coefficients associated with the first reference resource, wherein the first reference resource is a reference resource associated with the PMI combination coefficient.

24. The method according to claim 23, wherein mapping the plurality of PMI combination coefficients to a second part of a channel state information (CSI) report according to the descending order of priority comprises:
in a case that the number of non-zero combination coefficients corresponding to each of the reference resources is fed back in a first part of the CSI report, mapping, by the terminal, first PMI combination coefficients with priorities higher than a preset value corresponding to each of the reference resources in a first group of the second part of the CSI report and mapping second PMI combination coefficients corresponding to each of the reference resources in a second group of the second part, wherein the second PMI combination coefficients are PMI combination coefficients other than the first PMI combination coefficients.

25. The method according to claim 24, wherein the number of first PMI combination coefficients with a priority higher than a preset value corresponding to one reference resource is the ceiling of the number of non-zero combination coefficients corresponding to the reference resource divided by two, or the number of first PMI combination coefficients with a priority higher than a preset value corresponding to one reference resource is a difference between the ceiling of the number of non-zero combination coefficients corresponding to the reference resource divided by two and a rank value.

26. The method according to claim 24, wherein mapping priorities of non-zero PMI combination coefficients corresponding to the plurality of reference resources in the first group and the second group are determined according to at least one of the following:

a configuration order of each of the reference resources configured by the network side device;
a feedback order of each of the reference resources assigned by the network side device;
default information; and
a feedback order of each of the reference resources indicated by the terminal through third indication information.

27. The method according to claim 1, wherein determining a priority of the PMI combination coefficient comprises:
determining the priority of the PMI combination coefficient according to a priority related to a first reference resource associated with the PMI combination coefficient.

28. The method according to claim 27, wherein determining the priority of the PMI combination coefficient according to a priority of a first reference resource associated with the PMI combination coefficient comprises:

determining the priority Pri($l$, $i_t$, $f_t$) of the PMI combination coefficient according to the following formula:

$$\mathrm{Pri}(l, i_t, f_t) = 2 * \sum_{t=0}^{T-1} \mathrm{L_t} * \mathrm{v} * \pi(f_t) + v * i_t + l;$$

wherein

$$\pi(f_t) = min\left(2 * n_{3,l}^{(f_t)}, 2 * \left(N_3 - n_{3,l}^{(f_t)}\right) - 1\right);$$

$l$ is a transmission layer corresponding to the PMI combination coefficient, $l \in 0,1, \dots, v - 1$, $v$ is a rank of PMI;
t indicates that the PMI combination coefficient is a PMI combination coefficient associated with a $(t + 1)^{th}$ reference resource on the transmission layer $l$, $t \in 0,1, \dots, T - 1$, and T is the number of reference resources;
i is an index of the PMI combination coefficient;

$i_t$ is an index of beams associated with a $t^{th}$ reference resource, wherein if t > 0, $i_t = \sum_{k=0}^{t-1} L_k + \hat{\imath}_t$, and if t = 0, $i t = \hat{\imath}_t$, $\hat{\imath}_t \in 0,1, \dots, 2L_t - 1$;
$L_k$ is the number of beams associated with a $k^{th}$ reference resource;
$L_t$ is the number of beams associated with the $t^{th}$ reference resource;
$f_t$ is an index of a basis vector selected by the terminal associated with the $t^{th}$ reference source, $f_t \in 0,1, \dots, M_{v,t} - 1$, and $M_{v,t}$ is the number of basis vectors selected by the terminal associated with the $t^{th}$ reference resource; and

$n_{3,l}^{(f)}$ is a reference basis vector position associated with the reference resource on the transmission layer $l$.

29. The method according to claim 27, further comprising: determining, by the terminal, the priority related to the first reference resource according to at least one of the following:

a resource ID of the first reference resource, wherein the smaller the resource ID is, the higher the priority related to the first reference resource is;
the number of non-zero PMI combination coefficients associated with the first reference resource;
an order of the first reference resource indicated in a first part of the CSI report;
a priority of the first reference resource configured by the network side device;
a PMI combination coefficient with strongest energy or maximum amplitude associated with the first reference resource;
a sum of amplitudes/or a sum of energy of a plurality of PMI combination coefficients associated with the first reference resource;
a sum of amplitudes/or a sum of energy of PMI combination coefficients of the first reference resource on a preset spatial domain beam; and
a sum of amplitudes/or a sum of energy of PMI combination coefficients of the first reference resource on a preset frequency domain basis vector.

30. The method according to claim 29, further comprising:
in a case that an order of priority related to the first reference resource is determined according to the number of the non-zero PMI combination coefficients corresponding to the first reference resource, feeding back the number of the non-zero PMI combination coefficients corresponding to the first reference resource by one of the following:

sending a non-zero coefficient indication in the second part of the CSI report, wherein the non-zero coefficient indication is used to indicate the number of the non-zero PMI combination coefficients corresponding to the reference resource; and
sending indication information of the number of non-zero PMI combination coefficients corresponding to each of the reference resources in the first part of the CSI report.

31. A PMI combination coefficient sending apparatus, comprising:

an acquisition module, configured to acquire a plurality of PMI combination coefficients to be fed back under coordinated transmission of a plurality of reference resources;
a determination module, configured to, for each of the PMI combination coefficients, determine a priority of the PMI combination coefficient; and
a sending module, configured to map the plurality of PMI combination coefficients to a second part of a channel state information (CSI) report according to a descending order of priority for sending.

32. The apparatus according to claim 31, wherein that the determination module determines the priority of the PMI combination coefficients comprises:
determining the priority of the PMI combination coefficient according to a first reference basis vector position, wherein the first reference basis vector position is a reference basis vector position corresponding to the PMI combination coefficient among a plurality of reference basis vector positions.

33. The apparatus according to claim 31, wherein that the determination module determines the priority of the PMI combination coefficient comprises:

acquiring a combination coefficient priority weighting coefficient $\alpha$ corresponding to the first reference resource, wherein the first reference resource is a reference resource associated with the PMI combination coefficient; and determining the priority of the PMI combination coefficient according to the combination coefficient priority weighting coefficient $\alpha$.

34. The apparatus according to claim 31, wherein that the determination module determines the priority of the PMI combination coefficient comprises:
determining the priority of the PMI combination coefficient according to a position of the PMI combination coefficient among all the PMI combination coefficients associated with the first reference resource, wherein the first reference resource is a reference resource associated with the PMI combination coefficient.

35. The apparatus according to claim 31, wherein that the determination module determines the priority of the PMI combination coefficient comprises:
determining the priority of the PMI combination coefficient according to a priority of a first reference resource associated with the PMI combination coefficient.

36. A terminal, comprising a processor and a memory, the memory storing a program or an instruction capable of being run on the processor, wherein the program or the instruction, when executed by the processor, implements the steps of the PMI combination coefficient sending method according to any one of claims 1 to 30.

37. A readable storage medium, having a program or an instruction stored therein, wherein the program or the instruction, when executed by the processor, implements the steps of the PMI combination coefficient sending method according to any one of claims 1 to 30.

Network-side
device

11

11

Terminal

Terminal

## FIG. 1

200

S210

A terminal acquires a plurality of PMI combination coefficients to be fed back under cooperative transmission of a plurality of reference resources

S212

For the PMI combination coefficients, determine priorities of the PMI combination coefficients

S214

Map the plurality of PMI combination coefficients to a second part of a CSI report according to the descending order of the priorities for sending

## FIG. 2

300

S310

A network side device receives a CSI report sent by a terminal, where a second part of the CSI report includes a plurality of PMI combination coefficients

S312

The network side device acquires PMI fed back by the terminal according to the CSI report

## FIG. 3

400

401

Acquisition module

402

Determination module

403

Sending module

## FIG. 4

Communication device

500

Processor

501

Memory

502

## FIG. 5

600

610

601 Radio frequency unit

602 Network module

609 Memory
Application program
Operating system

608 Interface unit

603 Audio output unit

604 Input unit
6041 Graphics processor
6042 Microphone

607 User input unit
6071 Touch panel
6072 Another input device

Processor

606 Display unit
6061 Display panel

605 Sensor

## FIG. 6

FIG. 7

## INTERNATIONAL SEARCH REPORT

| International application No. |
|---|
| **PCT/CN2023/119963** |

| | |
|---|---|
| **A.** | **CLASSIFICATION OF SUBJECT MATTER** |
| | H04B 7/0456(2017.01)i; H04W 24/10(2009.01)i; H04W 72/04(2023.01)i |

According to International Patent Classification (IPC) or to both national classification and IPC

| | |
|---|---|
| **B.** | **FIELDS SEARCHED** |

Minimum documentation searched (classification system followed by classification symbols)

IPC: H04W H04B H04L

Documentation searched other than minimum documentation to the extent that such documents are included in the fields searched

Electronic data base consulted during the international search (name of data base and, where practicable, search terms used)

CNTXT; CNKI; VEN; ENTXTC; 3GPP: 信道状态信息, 预编码矩阵指示符, 优先, 映射, 系数, 从高到低, 顺序, channel state information, CSI, precoding matrix indicator, PMI, priority, map+, coefficient, order

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| X | US 2021075487 A1 (SAMSUNG ELECTRONICS CO., LTD.) 11 March 2021 (2021-03-11) claims 1-7, and description, paragraphs 10 and 176-371 | 1, 31, 36, 37 |
| X | CN 115053561 A (QUALCOMM INC.) 13 September 2022 (2022-09-13) description, paragraphs 120-192 | 1, 31, 36, 37 |
| X | ERICSSON. "R1-2112322 CSI enhancements for Multi-TRP and FR1 FDD reciprocity" *3GPP TSG-RAN WG1 Meeting #107bis-e*, 06 November 2021 (2021-11-06), section 2.2 | 1, 31, 36, 37 |
| A | CN 112671441 A (NOKIA TECHNOLOGIES OY) 16 April 2021 (2021-04-16) entire document | 1-37 |
| A | CN 114390579 A (VIVO COMMUNICATION TECHNOLOGY CO., LTD.) 22 April 2022 (2022-04-22) entire document | 1-37 |
| A | WO 2020135573 A1 (ZTE CORP.) 02 July 2020 (2020-07-02) entire document | 1-37 |

☐ Further documents are listed in the continuation of Box C.   ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 November 2023** | **22 November 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/119963**

| Patent document cited in search report | | | Publication date (day/month/year) | Patent family member(s) | | | Publication date (day/month/year) |
|---|---|---|---|---|---|---|---|
| US | 2021075487 | A1 | 11 March 2021 | US | 11463142 | B2 | 04 October 2022 |
| | | | | US | 2023121462 | A1 | 20 April 2023 |
| | | | | KR | 20220055486 | A | 03 May 2022 |
| | | | | EP | 3861647 | A1 | 11 August 2021 |
| | | | | EP | 3861647 | A4 | 01 December 2021 |
| | | | | WO | 2021045566 | A1 | 11 March 2021 |
| CN | 115053561 | A | 13 September 2022 | US | 2023071931 | A1 | 09 March 2023 |
| | | | | EP | 4104502 | A1 | 21 December 2022 |
| | | | | WO | 2021160180 | A1 | 19 August 2021 |
| | | | | WO | 2021159462 | A1 | 19 August 2021 |
| CN | 112671441 | A | 16 April 2021 | EP | 3809618 | A1 | 21 April 2021 |
| | | | | WO | 2021074486 | A1 | 22 April 2021 |
| | | | | FI | 20195893 | A1 | 17 April 2021 |
| | | | | FI | 129704 | B | 15 July 2022 |
| | | | | US | 2021119684 | A1 | 22 April 2021 |
| | | | | US | 11476913 | B2 | 18 October 2022 |
| CN | 114390579 | A | 22 April 2022 | None | | | |
| WO | 2020135573 | A1 | 02 July 2020 | CN | 110535498 | A | 03 December 2019 |
| | | | | CN | 110535498 | B | 18 October 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211153237